(19) Europäisches Patentamt
European Patent Office
Office européen des brevets

(11) EP 4 190 558 A1

(12) **EUROPEAN PATENT APPLICATION**
published in accordance with Art. 153(4) EPC

(43) Date of publication:
**07.06.2023 Bulletin 2023/23**

(21) Application number: **21849669.3**

(22) Date of filing: **28.07.2021**

(51) International Patent Classification (IPC):
***B32B 27/18*** (2006.01) ***C08K 5/3435*** (2006.01)
***C08K 5/3492*** (2006.01) ***C08K 5/524*** (2006.01)
***C08L 101/00*** (2006.01) ***C08J 5/18*** (2006.01)
***C08K 3/08*** (2006.01)

(52) Cooperative Patent Classification (CPC):
**B32B 27/18; C08J 5/18; C08K 3/015; C08K 3/08; C08K 5/3435; C08K 5/3492; C08K 5/524; C08L 101/00**

(86) International application number:
**PCT/JP2021/027970**

(87) International publication number:
**WO 2022/025137 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2020 JP 2020129746**
**07.07.2021 JP 2021113040**

(71) Applicant: **Dai Nippon Printing Co., Ltd.**
**Tokyo 162-8001 (JP)**

(72) Inventors:
- **ENDOH, Takashi**
  **Tokyo 162-8001 (JP)**
- **NAKAMURA, Haruka**
  **Tokyo 162-8001 (JP)**
- **NISHIGAKI, Ryosuke**
  **Tokyo 162-8001 (JP)**
- **SUMIDA, Yosuke**
  **Tokyo 162-8001 (JP)**
- **MORIYAMA, Koji**
  **Tokyo 162-8001 (JP)**
- **NAKAMURA, Katsuji**
  **Tokyo 162-8001 (JP)**

(74) Representative: **Müller-Boré & Partner Patentanwälte PartG mbB**
**Friedenheimer Brücke 21**
**80639 München (DE)**

# (54) ANTIVIRAL ARTICLE AND ANTIVIRAL RESIN COMPOSITION

(57) Provided is an antiviral article that has a discoloration due to light being suppressed. An antiviral article comprising a cured product layer, wherein the cured product layer comprises a cured product of a curable resin composition, an antiviral agent obtained by supporting or containing a silver ion in a carrier, and a light stabilizer, and the cured product layer comprises, as the light stabilizer, one or more hindered amine-based compounds selected from the group consisting of an NH type hindered amine-based compound and an NR type hindered amine-based compound. The antiviral article preferably has the cured product layer on a base material.

EP 4 190 558 A1

## Description

### Technical Field

The present disclosure relates to an antiviral article and an antiviral resin composition.

### Background Art

Conventionally, from the viewpoint of hygiene, a composition having an antibacterial property has been applied onto the surface of an object to be touched by a human, such as a building interior material, a vehicle interior material, OA equipment, and a touch panel, to apply an antibacterial treatment.

For example, Patent Literatures 1 to 3 have been proposed concerning a composition having an antibacterial property or an antibacterial article.

However, it is not enough only to have an antibacterial property against a virus represented by influenza virus. That is, the compositions or articles having an antibacterial property according to Patent Literatures 1 to 3 may not be able to satisfy an antiviral property.

On the other hand, ones according to Patent Literatures 4 and 5 have been proposed concerning a composition or article having an antiviral property.

### Citation List

#### Patent Literature

PTL1: JP 63-265958 A
PTL2: JP 3551201 B
PTL3: JP 4840048 B
PTL4: JP 6145758 B
PTL5: JP 6229429 B

### Summary of Invention

#### Technical Problem

The antiviral resin composition of Patent Literature 4 includes a cuprous oxide particle and the like. Because of this, a color tone derived from the color of cuprous oxide (reddish brown) cannot be prevented.

The interior decorative sheet having an antiviral property according to Patent Literature 5 is formed by blending a silver-based inorganic additive or a zinc-based inorganic additive into a coating resin on the outermost surface of a decorative sheet.

Of the additives of Patent Literature 5, the latter zinc-based inorganic additive presents a health problem when ingested in a large amount.

On the other hand, of the additives of Patent Literature 5, the former silver-based inorganic additive is expensive, but presents no health problem. However, when the amount of the silver-based inorganic additive added is increased in order to exhibit an antiviral property, the problem of being discolored brown by light (visible light, ultraviolet light) occurs. Patent Literature 5 does not at all study the problem of discoloration due to an increase in the amount of the silver-based inorganic additive added.

An object of the present disclosure is to suppress discoloration of a silver-based antiviral article and an antiviral resin composition due to light.

#### Solution to Problem

In order to solve the above problem, the present disclosure provides the following [1] and [2].

[1] An antiviral article comprising a cured product layer, wherein the cured product layer comprises a cured product of a curable resin composition, an antiviral agent obtained by supporting or comprising a silver ion in a carrier, and a light stabilizer, and the cured product layer comprises, as the light stabilizer, one or more hindered amine-based compounds selected from the group consisting of an NH type hindered amine-based compound and an NR type

hindered amine-based compound.

[2] An antiviral resin composition that is a resin composition comprising a curable resin composition, an antiviral agent obtained by supporting or comprising a silver ion in a carrier, and a light stabilizer, wherein the resin composition comprises, as the light stabilizer, one or more hindered amine-based compounds selected from the group consisting of an NH type hindered amine-based compound and an NR type hindered amine-based compound.

Advantageous Effects of Invention

According to the present disclosure, it is possible to provide an antiviral article and an antiviral resin composition that have discoloration of a silver-based antiviral agent due to light (visible light, ultraviolet light) being suppressed.

Brief Description of Drawings

[Fig. 1] Fig. 1 is a cross-sectional view showing one embodiment of the antiviral article of the present disclosure.
[Fig. 2] Fig. 2 is a cross-sectional view showing a further embodiment of the antiviral article of the present disclosure.
[Fig. 3] Fig. 3 is a cross-sectional view showing a further embodiment of the antiviral article of the present disclosure.

Description of Embodiments

[Antiviral article]

The antiviral article of the present disclosure is an article including a cured product layer, wherein the cured product layer includes a cured product of a curable resin composition, an antiviral agent obtained by supporting or containing a silver ion in a carrier, and a light stabilizer, and includes, as the light stabilizer, one or more hindered amine-based compounds selected from the group consisting of an NH type hindered amine-based compounds and an NR type hindered amine-based compound.

In general, even if articles have the same material and layer constitution, the "antiviral" efficacy of the articles and the "antibacterial" and "antifungal" efficacy thereof may not correlate with each other depending on various conditions. Examples of the various conditions include the type of a virus, the type of a bacterium, the type of a fungus, and an environmental condition. Because of this, the antiviral article of the present disclosure is not only applicable to an antiviral use but also may be applicable to an antibacterial use depending on the type of a bacterium, the environmental condition, and the required level of an antibacterial property. A mold is a type of fungus, and thus the antiviral article of the present disclosure may also be applicable to an antifungal use depending on the type of a mold, the environmental condition, and the required level of an antifungal property.

Figs. 1(A) to 1(E), Figs. 2(A) to 2 (D), and Fig. 3 are each a cross-sectional view showing a typical embodiment of an antiviral article 100 of the present disclosure.

The antiviral article 100 of Figs. 1(A) to 1(E), Figs. 2(A) to 2(D), and Fig. 3 has a cured product layer 10 including a cured product 11 of a curable resin composition and an antiviral agent 12 obtained by supporting or containing a silver ion in a carrier. The cured product layer 10 of the antiviral article 100 of Figs. 1(A) to 1(E), Figs. 2(A) to 2(D), and Fig. 3 contains "one or more hindered amine-based compounds selected from the group consisting of an NH type hindered amine-based compounds and an NR type hindered amine-based compound" not shown.

The antiviral article 100 of Figs. 1(A) to 1(E) is formed of a single layer of the cured product layer 10.

The cured product layer 10 of Fig. 1(A) includes the antiviral agent 12 throughout the cured product layer 10 in both the thickness direction (Z-axis direction in the figure) and the in-plane directions (each direction in the XY-plane in the figure). The cured product layer 10 of Fig. 1(B) includes the antiviral agent 12 on the front side (upper side in the figure) of the cured product layer 10. The cured product layer 10 of Fig. 1(C) includes the antiviral agent 12 on the front side (upper side in the figure) and the rear side (lower side in the figure) of the cured product layer 10. The cured product layer 10 of Fig. 1(D) includes the antiviral agent 12 in a partial region in the in-plane directions on the front side (upper side in the figure) of the cured product layer 10. The cured product layer 10 of Fig. 1(E) includes the antiviral agent 12 in a partial region on the front side (upper side in the figure) of the cured product layer 10 and in a partial region the rear side (lower side in the figure) of the cured product layer 10.

As shown in Figs. 1(A) to 1(E), the location of the antiviral agent 12 present in the cured product layer 10 is not particularly limited. However, from the viewpoint of enhancing the antiviral property, the antiviral agent 12 is preferably present on the surface on a side to be touched by a human.

The antiviral article 100 including a single layer of the cured product layer 10 as shown in Figs. 1(A) to 1(E)

can be obtained, for example, by preparing a laminate obtained by forming the cured product layer 10 on a base material having releasability, and then peeling the base material having releasability from the laminate.

The antiviral article 100 of Figs. 2(A) to 2(D) has the cured product layer 10 on a base material 20.

The antiviral article 100 of Fig. 2(A) has the cured product layer 10 on the entire surface of one side of the base material 20. The antiviral article 100 of Fig. 2(B) has the cured product layer 10 on the entire surface of each of both sides of the base material 20. The antiviral article 100 of Fig. 2(C) has the cured product layer 10 in a partial region on one side (Z-axis positive direction in the figure) of the base material 20. The antiviral article 100 of Fig. 2(D) has the cured product layer 10 in a partial region on one side (Z-axis positive direction in the figure) of the base material 20 and in a partial region on the other side (Z-axis negative direction in the figure) of the base material 20.

As shown in Figs. 2(A) to 2(D), the cured product layer 10 may be formed on the entire surface of the base material 20 or may be formed on a part of the base material 20. In addition, as shown in Figs. 2(A) to 2(D), the cured product layer 10 may be formed on only one surface of the base material 20 or may be formed on both surfaces of the base material 20.

The antiviral article 100 of Fig. 3 has the cured product layer 10 on a three-dimensionally shaped base material 20. The three-dimensionally shaped base material 20 of Fig. 3 is a door handle, and Fig. 3 shows a cross-sectional view thereof.

<Curing product of curable resin composition>

The cured product layer includes a cured product of a curable resin composition. As used herein, the "cured product of a curable resin composition" may be abbreviated as a "cured product."

The cured product of a curable resin composition mainly has a role as a binder resin. By including the cured product, the scratch resistance of the antiviral article is improved, and the antiviral property can be easily maintained for a long period of time.

Examples of the cured product of a curable resin composition include a cured product of a thermosetting resin composition and a cured product of an ionizing radiation curable resin composition, and among these, an ionizing radiation curable resin is preferable from the viewpoint of scratch resistance and production efficiency.

The thermosetting resin composition is a composition including at least a thermosetting resin, and is a resin composition that is cured by heating.

Examples of the thermosetting resin include an acrylic resin, a urethane resin, a phenol resin, a urea melamine resin, an epoxy resin, an unsaturated polyester resin, and a silicone resin. In addition to such a thermosetting resin, a curing agent, a curing catalyst, or the like is, if necessary, added to the thermosetting resin composition.

Typical examples of the ionizing radiation curable resin composition include an electron beam curable resin composition and an ultraviolet curable resin composition, and among these, an electron beam curable resin composition is preferable, for example, because the resin composition does not require a polymerization initiator and thus is less odorous, and is difficult to color. In addition, the electron beam curable resin composition is also preferable in that when the cured product layer contains an ultraviolet absorber described later, the electron beam curable resin composition more easily increases the crosslink density of the cured product layer and more easily improves the scratch resistance and the contamination resistance.

The ionizing radiation curable resin composition is a composition that includes a compound having an ionizing radiation curable functional group (hereinafter, also referred to as an "ionizing radiation curable compound").

The ionizing radiation curable functional group is a group that is crosslinked and cured by irradiation with an ionizing radiation, and preferable examples thereof include a functional group having an ethylenic double bond such as a (meth)acryloyl group, a vinyl group, or an allyl group. In addition, examples of the ionizing radiation curable functional group also include an epoxy group and an oxetanyl group.

As used herein, the (meth)acryloyl group refers to an acryloyl group or a methacryloyl group. In addition, as used herein, (meth)acrylate refers to acrylate or methacrylate.

In addition, the ionizing radiation means an electromagnetic wave or a charged particle beam that has an energy quantum capable of polymerizing or crosslinking a molecule; usually an ultraviolet light (UV) or an electron beam (EB) is used, and an electromagnetic wave such as an X-ray or a $\gamma$-ray, and a charged particle beam such as an $\alpha$-ray or an ion beam are also included.

Specifically, the ionizing radiation curable compound can be appropriately selected from the group consisting of a polymerizable monomer and a polymerizable oligomer (sometimes also referred to as a "polymerizable prepolymer") conventionally commonly used as an ionizing radiation curable resin, to use the same.

As the ionizing radiation curable compound, a compound having two or more ethylenically unsaturated bond groups is more preferable, and among such compounds, a polyfunctional (meth)acrylate-based compound having two or more ethylenically unsaturated bond groups is further preferable. As the polyfunctional (meth)acrylate-based compound, either of a monomer and an oligomer can be used.

The oligomer of the polyfunctional (meth)acrylate-based compound has a weight average molecular weight of preferably 1000 or more and 10000 or less, more preferably 2000 or more and 6000 or less, in order to provide the resulting article with good scratch resistance, processing and handling suitability, and antiviral exhibition together. The number of functional groups per molecule of the oligomer is preferably 2 or more and 10 or less, and more preferably 2 or more and 6 or less.

Examples of a bifunctional (meth)acrylate-based monomer among the polyfunctional (meth)acrylate-based compounds include ethylene glycol di(meth)acrylate, bisphenol A tetraethoxy diacrylate, bisphenol A tetrapropoxy diacrylate, and 1,6-hexanediol diacrylate.

Examples of a trifunctional or higher functional (meth)acrylate-based monomer include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid-modified tri(meth)acrylate.

Examples of the polyfunctional (meth)acrylate-based oligomer include an acrylate-based polymer such as a urethane (meth)acrylate, an epoxy (meth)acrylate, a polyester (meth)acrylate, or a polyether (meth)acrylate.

A urethane (meth)acrylate can be obtained, for example, by reacting a polyhydric alcohol and an organic diisocyanate with a hydroxy (meth)acrylate.

Examples of a preferable epoxy (meth)acrylate include a (meth)acrylate obtained by reacting a trifunctional or higher functional aromatic epoxy resin, alicyclic epoxy resin, aliphatic epoxy resin, or the like with (meth)acrylic acid, and a (meth)acrylate obtained by reacting a bifunctional or higher functional aromatic epoxy resin, alicyclic epoxy resin, aliphatic epoxy resin, or the like with a polybasic acid and (meth)acrylic acid, and a (meth)acrylate obtained by reacting a bifunctional or higher functional aromatic epoxy resin, alicyclic epoxy resin, aliphatic epoxy resin, or the like with a phenol and (meth)acrylic acid.

The above ionizing radiation curable resins can be used singly or in combinations of two or more.

When the ionizing radiation curable compound is an ultraviolet curable compound, the ionizing radiation curable resin composition preferably includes an additive such as a photopolymerization initiator or a photopolymerization accelerator.

Examples of the photopolymerization initiator include one or more selected from acetophenone, benzophenone, α-hydroxyalkylphenone, Michler's ketone, benzoin, benzyl dimethyl ketal, benzoylbenzoate, an α-acyloxime ester, and a thioxanthone.

In addition, the photopolymerization accelerator can reduce the polymerization inhibition due to air at the time of curing and accelerate the curing rate, and examples thereof include one or more selected from the group consisting of isoamyl p-dimethylaminobenzoate, ethyl p-dimethylaminobenzoate, and the like.

The content of the cured product of a curable resin composition is preferably 50% by mass or more, more preferably 70% by mass or more, further preferably 90% by mass or more, and most preferably 100% by mass, with respect to the total amount of the binder resin.

<Antiviral agent obtained by supporting or containing silver ion in carrier>

The cured product layer includes an antiviral agent obtained by supporting or containing a silver ion in a carrier. As used herein, the "antiviral agent obtained by supporting or containing a silver ion in a carrier" may be abbreviated as an "antiviral agent."

As shown in Figs. 1(A) to 1(E), at least a part of the antiviral agent 12 preferably protrudes from the cured product layer 10 in order to enhance the antiviral property.

As the carrier, an inorganic compound such as a zeolite, an apatite, a glass, zirconium phosphate, and titanium phosphate is preferable, and among these, a porous inorganic compound is preferable.

The zeolite is an aluminosilicate of an alkali metal or an alkaline earth metal, and either of a natural zeolite and a synthetic zeolite can be used. In addition, zeolites are classified into an A type, a faujasite type (X type, Y type), a mordenite type, a clinoptilolite type, and the like according to the crystal structure, and any thereof can be used.

The apatite is a general term for a mineral having a composition represented by the following general formula.

$$M_{10}(ZO_4)_3X_2$$

In the above formula, M represents Ca, Ba, Mg, Na, K, Fe, Al, or the like, Z represents P, S, Si, As, or the like, and X represents F, Cl, O, OH, or the like. Typical examples corresponding to the above formula include fluoroapatite "$Ca_{10}(PO_4)_6F_2$" and hydroxyapatite "$Ca_{10}(PO_4)_6(OH)_2$."

Examples of the glass include soda glass, borosilicate glass, lead glass, aluminosilicate glass, borate glass, and phosphate glass.

A method for supporting or containing a silver ion in a carrier may be appropriately selected from various known forms in consideration of various conditions such as the type of the curable resin composition and each form thereof, a

processing condition, and required antiviral performance. Here, "containing a silver ion" means holding a silver ion or a substance that can generate a silver ion in a carrier in some form. In addition, the "substance that can generate a silver ion" means a substance that generates a silver ion due to an external factor, a time-dependent factor, or the like, such as a substance that generates a silver ion by being dissolved in water or the like.

Examples of a specific supporting or containing form include a method for supporting a silver ion by physical adsorption or chemical adsorption; a method for supporting a silver ion by an ion exchange reaction; a method for supporting a silver ion by using a binder; a method for containing a silver ion by bombarding a silver compound into a carrier; and a method for supporting or containing a silver ion by forming a thin layer of a silver compound on the surface of a carrier by a thin film formation method such as vapor deposition, a dissolution and precipitation reaction, or sputtering.

The antiviral agent is preferably in the shape of a particle.

Examples of the shape of the particle of the antiviral agent include a sphere, an ellipsoid, a polyhedron, and a scaly shape, and the shape thereof is not particularly limited.

The average particle diameter of the antiviral agent is preferably 0.1 to 10.0 μm, more preferably 0.5 to 5.0 μm, and further preferably 1.0 to 4.0 μm.

By setting the average particle diameter to 0.1 μm or more, the stability of an ink for a cured product layer can be easily obtained. In addition, by setting the average particle diameter to 10.0 μm or less, poor appearance, decreases in scratch resistance and contamination resistance, and whitening of the coating film due to excessive protrusion of the antiviral agent from the surface of the cured product layer can be easily suppressed, and further, wear on a member (coating roll, doctor blade, or the like) of a coating apparatus can be easily suppressed.

When the average particle diameter of the antiviral agent is defined as D and the thickness of the cured product layer is defined as T, D/T is preferably 1.0 or less, more preferably 0.7 or less, and further preferably 0.4 or less.

By setting D/T to 1.0 or less, poor appearance, a decrease in contamination resistance, and whitening of the coating film due to excessive protrusion of the antiviral agent from the surface of the cured product layer can be easily suppressed, and further, wear on a member (coating roll, doctor blade, or the like) of a coating apparatus can be easily suppressed.

The lower limit of D/T is not particularly limited, and is usually 0.01 or more and is preferably 0.05 or more.

As used herein, the average particle diameter means one measured as the mass average value d50 in a particle size distribution measurement by a laser light diffraction method.

The amount of a silver ion in the antiviral agent is preferably 0.1 to 30.0 parts by mass, more preferably 0.5 to 25.0 parts by mass, and further preferably 1.0 to 20.0 parts by mass, with respect to 100 parts by mass of the carrier. Here, the "amount of a silver ion" means both the carried silver ion and the contained silver ion.

By setting the amount of a silver ion to 0.1 parts by mass or more, the antiviral property can be easily improved. Further, by setting the amount of a silver ion to 30.0 parts by mass or less, discoloration due to light can be more easily suppressed.

The lower limit of the content of the antiviral agent is preferably 0.1 parts by mass or more, more preferably 0.5 parts by mass or more, and more preferably 1.0 part by mass or more, and the upper limit thereof is preferably 20.0 parts by mass or less, more preferably 17.0 parts by mass or less, more preferably 15.0 parts by mass or less, more preferably 10.0 parts by mass or less, and more preferably 5.0 parts by mass or less, with respect to 100 parts by mass of the cured product.

By setting the content of the antiviral agent to 0.1 parts by mass or more, the antiviral property can be easily improved.

By setting the content of the antiviral agent to 20.0 parts by mass or less, discoloration due to light can be more easily suppressed. In addition, by setting the content of the antiviral agent to 20.0 parts by mass or less, a decrease in a physical property of the coating film such as the coating film strength or the scratch resistance can be suppressed. Further, by setting the content of the antiviral agent to 20.0 parts by mass or less, a decrease in contamination resistance, and whitening of the coating film due to excessive protrusion of the antiviral agent from the surface of the cured product layer can be easily suppressed, and further, wear on a member (coating roll, doctor blade, or the like) of a coating apparatus can be easily suppressed.

When the binder resin is a cured product of a curable resin composition, the content of the antiviral agent is preferably set to a large value in the above range.

<Light stabilizer>

The cured product layer further includes a light stabilizer, and further includes, as the light stabilizer, one or more hindered amine-based compounds selected from the group consisting of an NH type hindered amine-based compound and an NR type hindered amine-based compound. When the cured product layer does not include, as the light stabilizer, one or more hindered amine-based compounds selected from the group consisting of an NH type hindered amine-based compound and an NR type hindered amine-based compound, discoloration of an antiviral article due to

light cannot be suppressed.

The hindered amine-based compound has a structure including a 2,2,6,6-tetramethylpiperidine skeleton in the molecule.

Examples of the hindered amine-based compound include an NH type hindered amine-based compound, an NR type hindered amine-based compound, and an NOR type hindered amine-based compound, and as used herein, one or more hindered amine-based compounds selected from the group consisting of an NH type hindered amine-based compound and an NR type hindered amine-based compound need to be included. It is considered that the reason why one or more hindered amine-based compounds selected from the group consisting of an NH type hindered amine-based compound and an NR type hindered amine-based compound suppress discoloration is because the NH type hindered amine-based compound and the NR type hindered amine-based compound easily form a complex with a silver ion.

In addition, among an NH type hindered amine-based compound and an NR type hindered amine-based compound, an NR type hindered amine-based compound is preferable. That is, the cured product layer preferably includes one or more hindered amine-based compounds selected from the group consisting of an NR type hindered amine-based compound.

The NH type hindered amine-based compound refers to a compound in which the hydrogen atom bonded to a nitrogen atom in the 2,2,6,6-tetramethylpiperidine skeleton remains as a hydrogen atom.

Specific examples of the NH type hindered amine-based compound include bis(2,2,6,6-tetramethyl-4-piperidyl) sebacate.

The NR type hindered amine-based compound refers to a compound in which the hydrogen atom bonded to a nitrogen atom in the 2,2,6,6-tetramethylpiperidine skeleton is replaced with an alkyl group. The number of carbon atoms of the alkyl group is preferably 1 to 12, and more preferably 1 (the alkyl group is a methyl group).

Specific examples of the NR type hindered amine-based compound include 2-[[3,5-bis(1,1-dimethylethyl)-4-hydroxyphenyl]methyl]-2-butylpropanediacid bis[1,2,2,6,6-pentamethyl-4-piperidinyl], bis(1,2,2,6,6-pentamethyl-4-piperidinyl) sebacate, 1-methyl 10-(1,2,2,6,6-pentamethyl-4-piperidyl) sebacate, and 1,2,2,6,6-pentamethyl-4-piperidinyl-methacrylate.

The NOR type hindered amine-based compound refers to a compound in which the hydrogen atom bonded to a nitrogen atom in the 2,2,6,6-tetramethylpiperidine skeleton is replaced with $OR^1$ or $OCOR^2$. $R^1$ and $R^2$ are each an alkyl group and/or a cycloalkyl group, preferably an alkyl group and/or a cycloalkyl group having 5 to 12 carbon atoms.

The NH type hindered amine-based compound and the NR type hindered amine-based compound have a base dissociation constant (pkb) of preferably 8.5 or less, more preferably 7.0 or less, and further preferably 6.0 or less. When the pkb of the NH type hindered amine-based compound and the NR type hindered amine-based compound is 8.5 or less, discoloration can be more easily suppressed.

The lower limit of the pkb of the NH type hindered amine-based compound and the NR type hindered amine-based compound is not particularly limited, and is preferably 4.0 or more, and more preferably 4.5 or more.

The NH type hindered amine-based compound and the NR type hindered amine-based compound may or may not each have an ethylenic double bond polymerizable with a curable resin composition.

The molecular weight of the NH type hindered amine-based compound and the NR type hindered amine-based compound is preferably 1000 or less, more preferably 800 or less, and further preferably 700 or less, from the viewpoint of easily improving the solubility in an ink for a cured product layer. Improving the solubility of the NH type hindered amine-based compound and the NR type hindered amine-based compound in an ink for a cured product layer is preferable in that by improving the solubility, the NH type hindered amine-based compound and the NR type hindered amine-based compound are diffused throughout the cured product layer and discoloration can be more easily suppressed.

The lower limit of the molecular weight of the NH type hindered amine-based compound and the NR type hindered amine-based compound is not particularly limited, and is usually 200 or more and is preferably 215 or more, and more preferably 230 or more.

The content of the NH type hindered amine-based compound and the NR type hindered amine-based compound is preferably 20 to 1000 parts by mass, more preferably 30 to 500 parts by mass, and further preferably 50 to 200 parts by mass, with respect to 100 parts by mass of the antiviral agent. When two or more NH type hindered amine-based compounds and NR type hindered amine-based compounds are included, the above content means the total amount of the two or more NH type hindered amine-based compounds and NR type hindered amine-based compounds.

By setting the content of the NH type hindered amine-based compound and the NR type hindered amine-based compound to 20 parts by mass or more, discoloration can be easily suppressed. In addition, by setting the content of the NH type hindered amine-based compound and the NR type hindered amine-based compound to 1000 parts by mass or less, lowering of the crosslink density of the cured product of a curable resin composition and lowering of the scratch resistance and the contamination resistance of the cured product layer can be easily suppressed.

<<Further light stabilizer>>

The cured product layer may contain a further light stabilizer as long as the effects of the present disclosure are not inhibited. Examples of the further light stabilizer include an NOR type hindered amine-based compound, an aromatic compound, an amine-based compound, an organic acid-based compound, and a catechin-based compound.

A light stabilizer other than an NH type hindered amine-based compound and an NR type hindered amine-based compound is unlikely to suppress discoloration. Because of this, the cured product layer preferably does not substantially contain a further light stabilizer (light stabilizer other than an NH type hindered amine-based compound and an NR type hindered amine-based compound). The term "not substantially contain" means that the content of the further light stabilizer is 0.1% by mass or less, with respect to the total solid content of the cured product layer, and the content thereof is preferably 0.01% by mass or less, and more preferably 0.001% by mass or less.

<Antioxidant>

The cured product layer preferably further includes an antioxidant.

Examples of the antioxidant include a phenol-based antioxidant, a sulfur-based antioxidant, and a phosphorus-based antioxidant, and among these, a phosphorus-based antioxidant is preferable. When the cured product layer includes a phosphorus-based antioxidant, discoloration due to light can be more easily suppressed. A phosphorus-based antioxidant is particularly preferable in that it is easy to suppress discoloration due to light in the state of an antiviral resin composition. By suppressing discoloration due to light in the state of an antiviral resin composition, the handleability of the antiviral resin composition can be improved. It is considered that the phosphorus-based antioxidant can easily capture a radical generated by light and thus can easily suppress the alteration of a silver ion.

<<Phosphorus-based antioxidant>>

Examples of the phosphorus-based antioxidant include a compound having a phosphorous acid structure represented by the following formula (1), a compound having a phosphonic acid structure represented by the following formula (2), a compound having a phosphinic acid structure represented by the following formula (3), and a compound having a phosphine oxide structure represented by the following formula (4). Among these, a compound having a phosphorous acid structure represented by the following formula (1) is preferable because the compound easily exhibits the effect of suppressing discoloration due to light in the state of an antiviral resin composition. In addition, among compounds having a phosphorous acid structure represented by the following formula (1), a compound represented by the following general formula (1-2-1) is more preferable.

As the phosphorus-based antioxidant, one or two or more can be used.

(1)

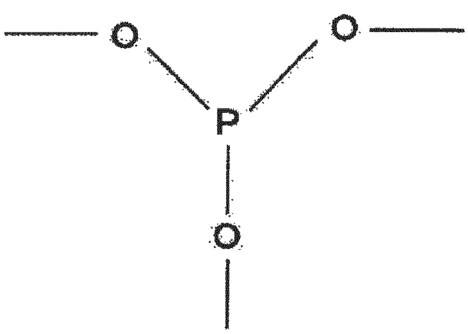

(2)

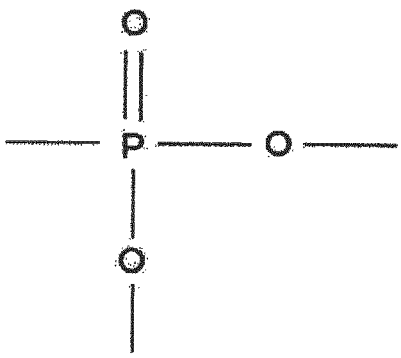

(3)

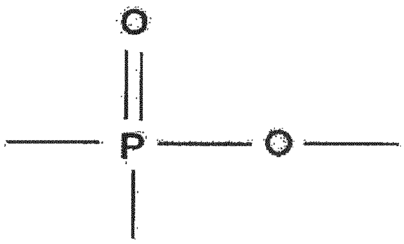

(4)

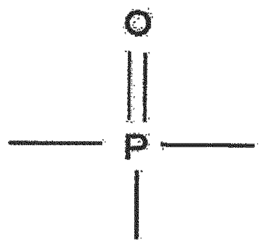

Examples of the compound having a phosphorous acid structure represented by formula (1) include compounds represented by the following general formulas (1-1) to (1-3). Among general formulas (1-1) to (1-3), general formulas (1-1) and (1-2) are preferable in that those represented by general formulas (1-1) and (1-2) tend to have good solubility in an ink for a cured product layer. Improving the solubility of the phosphorus-based antioxidant in an ink for a cured product layer is preferable in that by improving the solubility, the phosphorus-based antioxidant is diffused throughout the cured product layer and discoloration can be more easily suppressed.

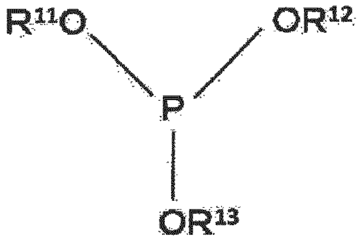

(1-1)

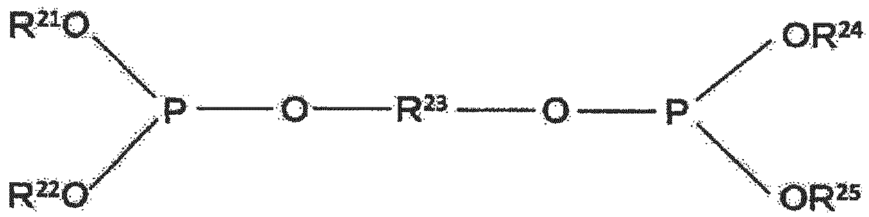

(1-2)

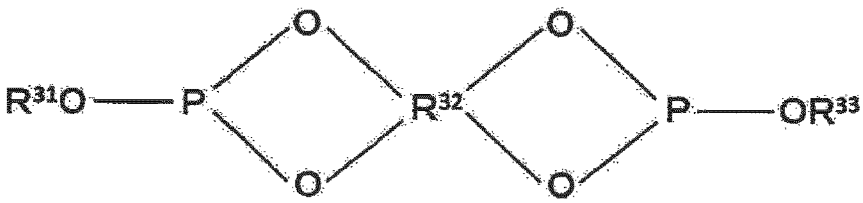

(1-3)

In general formula (1-1), $R^{11}$, $R^{12}$, and $R^{13}$ each independently represent a hydrogen atom, a halogen atom, an alkyl group, an aryl group, an arylalkyl group, or a hydrocarbon group optionally including a hetero atom, and these each optionally have a substituent. In addition, two selected from the group consisting of $R^{11}$, $R^{12}$, and $R^{13}$ optionally combine to form a ring.

From the viewpoint of further suppressing discoloration, at least one of $R^{11}$, $R^{12}$, and $R^{13}$ is preferably a linear alkyl group The number of carbon atoms of the linear alkyl group is preferably 6 to 18, more preferably 8 to 15, and further preferably 8 to 10. When at least one of $R^{11}$, $R^{12}$, and $R^{13}$ is a linear alkyl group, the remainder of $R^{11}$, $R^{12}$, and $R^{13}$ is/are preferably phenyl group(s).

In addition, from the viewpoint of enhancing the solubility and the viewpoint of further suppressing discoloration, $R^{11}$, $R^{12}$, and $R^{13}$ preferably do not combine with each other (two selected from the group consisting of $R^{11}$, $R^{12}$, and $R^{13}$ preferably do not combine to form a ring).

Specific examples of the phosphorus-based antioxidant represented by general formula (1-1) are shown by the following formulas (1-1-1) to (1-1-3).

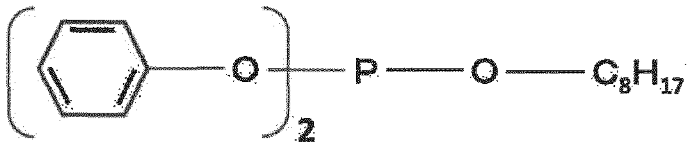

(1-1-1)

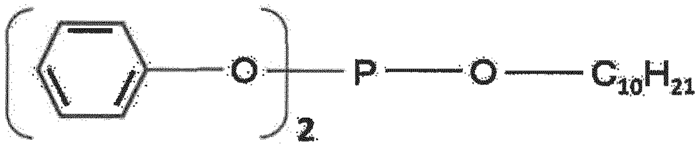

(1-1-2)

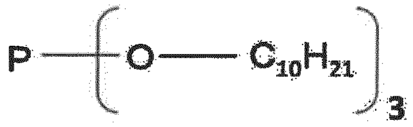

(1-1-3)

In general formula (1-2), $R^{23}$ is a hydrocarbon group optionally including a hetero atom and optionally further has a substituent. In addition, $R^{21}$, $R^{22}$, $R^{24}$, and $R^{25}$ each independently represent a hydrogen atom, a halogen atom, an alkyl group, an aryl group, an arylalkyl group, or a hydrocarbon group optionally including a hetero atom, and each optionally have a substituent. In addition, $R^{21}$ and $R^{22}$ optionally combine to form a ring. In addition, $R^{24}$ and $R^{25}$ optionally combine to form a ring.

From the viewpoint of further suppressing discoloration, at least one of $R^{21}$, $R^{22}$, $R^{22}$, and $R^{24}$ is preferably a linear alkyl group, and all thereof are more preferably linear alkyl groups. The number of carbon atoms of the linear alkyl group is preferably 6 to 18 and more preferably 12 to 15. In addition, from the viewpoint of enhancing the solubility and the viewpoint of further suppressing discoloration, $R^{21}$, $R^{22}$, $R^{24}$, and $R^{25}$ preferably do not combine with each other ($R^{21}$, $R^{22}$, $R^{24}$, and $R^{25}$ preferably do not combine with each other to form a ring).

Specific examples of the phosphorus-based antioxidant represented by general formula (1-2) are shown below. In the following general formula (1-2-1), each R independently represents a linear alkyl group having 12 to 15 carbon atoms.

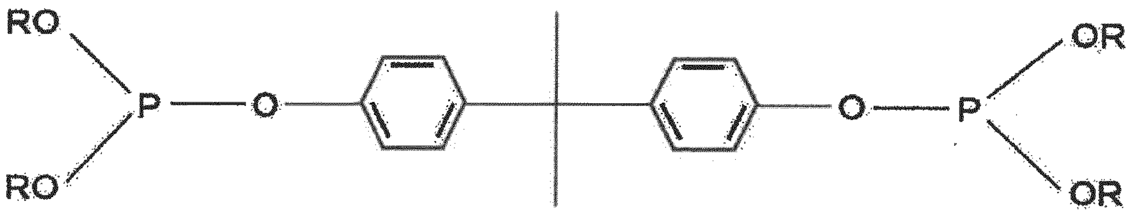

(1-2-1)

In general formula (1-3), $R^{32}$ is a hydrocarbon group optionally including a hetero atom and optionally further has a substituent. $R^{31}$ and $R^{33}$ are each independently a hydrogen atom, a halogen atom, an alkyl group, an aryl group, an arylalkyl group, or a hydrocarbon group optionally including a hetero atom, and each optionally further have a substituent.

The phosphorus-based antioxidant may or may not have an ethylenic double bond polymerizable with a curable resin composition, and preferably does not have the ethylenic double bond. It is considered that when the phosphorus-based antioxidant does not have an ethylenic double bond polymerizable with a curable resin composition, the degree of freedom of movement of the phosphorus-based antioxidant in the cured product layer is increased, the phosphorus-based antioxidant is diffused throughout the cured product layer, and discoloration can be easily suppressed.

The molecular weight of the phosphorus-based antioxidant is preferably 1500 or less, more preferably 1300 or less, and further preferably 1200 or less, from the viewpoint of easily improving the solubility in an ink for a cured product layer. The lower limit of the molecular weight of the phosphorus-based antioxidant is not particularly limited, and is usually 270 or more and is preferably 300 or more, and more preferably 330 or more.

The lower limit of the content of the phosphorus-based antioxidant is preferably 1 part by mass or more, more preferably 3 parts by mass or more, more preferably 5 parts by mass or more, more preferably 10 parts by mass or

more, more preferably 15 parts by mass or more, and more preferably 20 parts by mass or more, and the upper limit thereof is preferably 1000 parts by mass or less, more preferably 800 parts by mass or less, more preferably 600 parts by mass or less, more preferably 400 parts by mass or less, more preferably 200 parts by mass or less, more preferably 100 parts by mass or less, and more preferably 70 parts by mass or less, with respect to 100 parts by mass of the antiviral agent.

By setting the content of the phosphorus-based antioxidant to 1 part by mass or more, discoloration can be easily suppressed. In addition, by setting the content of the phosphorus-based antioxidant to 1000 parts by mass or less, lowering of the crosslink density of the cured product of the curable resin composition and lowering of the scratch resistance and the contamination resistance of the cured product layer can be easily suppressed.

<Ultraviolet absorber>

The cured product layer preferably further includes an ultraviolet absorber from the viewpoint of weather resistance.

Examples of the ultraviolet absorber include a benzotriazole-based ultraviolet absorber, a benzophenone-based ultraviolet absorber, and a triazine-based ultraviolet absorber, and a triazine-based ultraviolet absorber is preferable. As the ultraviolet absorber, one or two or more can be used.

In addition, among the triazine-based ultraviolet absorbers, a hydroxyphenyltriazine-based ultraviolet absorber in which three organic groups are linked to the triazine ring, the organic group being at least one organic group selected from the group consisting of a hydroxyphenyl group, an alkoxyphenyl group, and an organic group including these groups is more preferable, and a hydroxyphenyltriazine-based ultraviolet absorber represented by the following general formula (A) is further preferable. The hydroxyphenyltriazine-based ultraviolet absorber has a branched structure, and thus is expected to be unlikely to bleed out from the cured product layer, and excellent weather resistance can be obtained over a longer period of time.

In addition, an ultraviolet absorber having an ethylenic double bond such as a (meth)acryloyl group, a vinyl group, or an allyl group is preferable in that it is easy to suppress bleed-out.

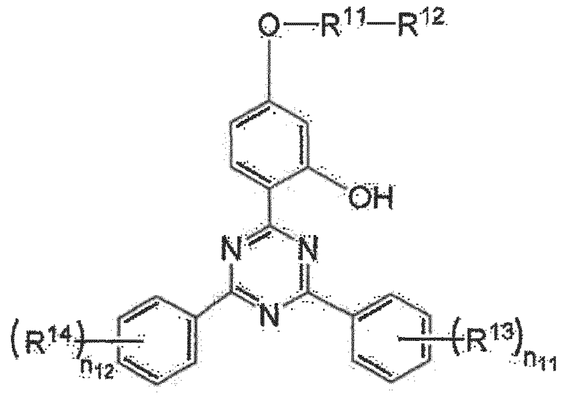

(A)

In general formula (A), $R^{11}$ is a divalent organic group, $R^{12}$ is an ester group represented by -C(=O)OR$^{15}$, $R^{13}$, $R^{14}$, and $R^{15}$ are each independently a monovalent organic group, and $n_{11}$ and $n_{12}$ are each independently an integer of 1 to 5.

Examples of the divalent organic group represented by $R^{11}$ include an aliphatic hydrocarbon group such as an alkylene group or an alkenylene group, and an alkylene group is preferable from the viewpoint of weather resistance, and the number of carbon atoms thereof is preferably 1 or more and 20 or less, more preferably 1 or more and 12 or less, further preferably 1 or more and 8 or less, and particularly preferably 1 or more and 4 or less. The alkylene group and the alkenylene group may be linear, branched, or cyclic, and are preferably linear or branched.

Examples of the alkylene group having 1 or more and 20 or less carbon atoms include a methylene group, a 1,1-ethylene group, a 1,2-ethylene group, various propylene groups (hereinafter, "various" is meant to include a linear one, a branched one, and isomers thereof) such as 1,3-propylene, 1,2-propylene, and 2,2-propylene, various butylene groups, various pentylene groups, various hexylene groups, various heptylene groups, various octylene groups, various nonylene groups, various decylene groups, various undecylene groups, various dodecylene groups, various tridecylene groups, various tetradecylene groups, various pentadecylene groups, various hexadecylene groups, various heptadecylene groups, various octadecylene groups, various nonadecylene groups, and various icosylene groups.

Examples of the monovalent organic group represented by $R^{13}$ or $R^{14}$ include an alkyl group, an alkenyl group, a cycloalkyl group, an aryl group, and an arylalkyl group, and an aromatic hydrocarbon group such as an aryl group or

an arylalkyl group is preferable, and an aryl group is preferable. Among these, a phenyl group is preferable as the monovalent organic group represented by $R^{13}$ or $R^{14}$.

The aryl group is an aryl group having preferably 6 or more and 20 or less carbon atoms, more preferably 6 or more and 12 or less carbon atoms, and further preferably 6 or more and 10 or less carbon atoms, and examples thereof include a phenyl group, various methylphenyl groups, various ethylphenyl groups, various dimethylphenyl groups, various propylphenyl groups, various trimethylphenyl groups, various butylphenyl groups, and various naphthyl groups. The arylalkyl group is an arylalkyl group having preferably 7 or more and 20 or less carbon atoms, more preferably 7 or more and 12 or less carbon atoms, and further preferably 7 or more and 10 or less carbon atoms, and examples thereof include a benzyl group, a phenethyl group, various phenylpropyl groups, various phenylbutyl groups, various methylbenzyl groups, various ethylbenzyl groups, various propylbenzyl groups, various butylbenzyl groups, and various hexylbenzyl groups.

Examples of the monovalent organic group represented by $R^{15}$ include an alkyl group, an alkenyl group, a cycloalkyl group, an aryl group, and an arylalkyl group, and an aliphatic hydrocarbon group such as an alkyl group or an alkenyl group is preferable, and an alkyl group is more preferable. That is, as $R^{12}$, an alkyl ester group and an alkenyl ester group are preferable, and an alkyl ester group is more preferable.

The alkyl group is an alkyl group having preferably 1 or more and 20 or less carbon atoms, more preferably 2 or more and 16 or less carbon atoms, and further preferably 6 or more and 12 or less carbon atoms, and examples thereof include a methyl group, an ethyl group, various propyl groups, various butyl groups, various pentyl group, various hexyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, various octadecyl groups, various nonadecyl groups, and various icosyl groups.

The alkenyl group is an alkenyl group having preferably 2 or more and 20 or less carbon atoms, more preferably 3 or more and 16 or less carbon atoms, and further preferably 6 or more and 12 or less carbon atoms, and examples thereof include a vinyl group, various propenyl groups, various butenyl groups, various pentenyl groups, various hexenyl groups, various octenyl groups, various nonenyl groups, various decenyl groups, various undecenyl groups, various dodecenyl groups, various tridecenyl groups, various tetradecenyl groups, various pentadecenyl groups, various hexadecenyl groups, various heptadecenyl groups, various octadecenyl groups, various nonadecenyl groups, and various icosenyl groups.

More specifically, as the hydroxyphenyltriazine compound represented by general formula (A), a hydroxyphenyltriazine compound wherein $R^{11}$ is an alkylene group having 1 or more and 20 or less carbon atoms, $R^{12}$ and $R^{15}$ are each an alkyl ester group that is an alkyl group having 1 or more and 20 or less carbon atoms, $R^{13}$ and $R^{14}$ are each an aryl group having 6 or more and 20 or less carbon atoms, and $n_{11}$ and $n_{12}$ are each 1 is preferable, a hydroxyphenyltriazine compound wherein $R^{11}$ is an alkylene group having 1 or more and 12 or less carbon atoms, $R^{12}$ and $R^{15}$ are each an alkyl ester group that is an alkyl group having 2 or more and 16 or less carbon atoms, $R^{13}$ and $R^{14}$ are each an aryl group having 6 or more and 12 or less carbon atoms, and $n_{11}$ and $n_{12}$ are each 1 is more preferable, a hydroxyphenyltriazine compound wherein $R^{11}$ is an alkylene group having 1 or more and 8 or less carbon atoms, $R^{12}$ and $R^{15}$ are each an alkyl ester group that is an alkyl group having 6 or more and 12 or less carbon atoms, $R^{13}$ and $R^{14}$ are each an aryl group having 6 or more and 10 or less carbon atoms, and $n_{11}$ and $n_{12}$ are each 1 are further preferable, and a hydroxyphenyltriazine compound wherein $R^{11}$ is an alkylene group having 1 or more and 4 or less carbon atoms, $R^{12}$ and $R^{15}$ are each an ester group that is an alkyl group having 8 carbon atoms, $R^{13}$ and $R^{14}$ are each a phenyl group, and $n_{11}$ and $n_{12}$ are each 1 is particularly preferable.

The content of the ultraviolet absorber is preferably 0.2 to 10.0 parts by mass, more preferably 0.5 to 5.0 parts by mass, and further preferably 1.0 to 4.0 parts by mass, with respect to 100 parts by mass of the cured product.

The cured product layer may contain an extender pigment. The extender pigment is used, for example, in order to adjust the design of an antiviral article.

Examples of the extender pigment include an inorganic particle of silica, alumina, calcium carbonate, aluminosilicate, barium sulfate, or the like, and an organic particle of polyethylene, a urethane resin, polycarbonate, polyamide (nylon), or the like.

The shape of the extender pigment is not particularly limited, and is preferably polyhedral, spherical, scaly, or the like. In addition, the average particle diameter of the extender pigment is usually about 1 to 10 $\mu$m and is preferably 3 to 8 $\mu$m.

In addition, if necessary, the cured product layer may contain a colorant to be colored to a desired hue, lightness, and saturation. The colorant may be appropriately selected from the group consisting of the same colorants as those used for a colored layer and a picture layer described later. By coloring the cured product layer to an appropriate color (hue, lightness, and saturation) with a colorant, the appearance of the design can also be improved, and the effect of reducing discoloration of the cured product layer can also be still further improved by making discoloration of the cured product layer caused by light or the like less noticeable by coloring, in combination with the discoloration reducing effect due to the addition of a light stabilizer.

<Thickness>

The thickness of the cured product layer can be, for example, 1.0 μm or more and 10000 μm or less from the viewpoint of the balance between a processing characteristic and scratch resistance.
When the antiviral article is composed of a single layer of the cured product layer, the thickness of the cured product layer is preferably thick.
On the other hand, in the case of a form in which a cured product layer is formed on a base material by coating, the thickness of the cured product layer is preferably a thin film in consideration of, for example, the base material being responsible for the self-supporting property and the durability against an external force, the effect of the antiviral property being saturated if the thickness of the cured product layer is equal to or greater than a certain thickness, and a disadvantage such as a decrease in post-processing suitability or an increase in material cost also occurring as the thickness of the cured product layer is increased. Specifically, the thickness of the cured product layer is preferably 1.5 μm or more and 30 μm or less, more preferably 2 μm or more and 20 μm or less, and further preferably 3 μm or more and 15 μm or less, from the viewpoint of the balance between a processing characteristic and scratch resistance.

<Formation method>

The cured product layer can be formed, for example, by applying an ink for a cured product layer including materials constituting the cured product layer (one or more hindered amine-based compounds selected from the group consisting of an NH type hindered amine-based compound and an NR type hindered amine-based compound, a curable resin composition, an antiviral agent, and the like) and a solvent or the like to be added if necessary, onto a base material, and drying and curing the ink. The cured product layer can also be formed by applying an ink for a cured product layer onto a base material having releasability and drying and curing the ink to form a cured product layer, and transferring the cured product layer to another base material or the like.

<Lamination constitution>

The antiviral article of the present disclosure may be a single layer of a cured product layer, or may have a layer other than a cured product layer.
An antiviral article formed of a single layer of a cured product layer can be obtained, for example, by preparing a laminate obtained by forming a cured product layer on a base material having releasability and then peeling off the base material having releasability from the laminate.
Examples of the layer other than the cured product layer of the antiviral article include a base material, a primer layer, a decorative layer, a transparent resin layer, and an adhesive layer. Examples of the lamination constitution of the antiviral article include the following (1) to (12). In the following (1) to (12), "/" represents the interface between layers.
Examples of the layer other than the cured product layer of the antiviral article also include functional layers such as a magnetic material layer for use in magnetic recording; an electric conductor layer that functions as a circuit, a copper wire for current, or an electromagnetic wave shielding layer; a gas barrier layer for suppressing permeation of a gas such as water vapor or oxygen; a light reflecting layer that reflects visible light with a high reflectance; and an antireflection layer for suppressing reflection of visible light. These functional layers can be formed at any location in the following lamination constitutions (1) to (12) depending on the function of each layer.

(1) Cured product layer
(2) Base material/cured product layer
(3) Base material/primer layer/cured product layer
(4) Base material/decorative layer/cured product layer
(5) Base material/transparent resin layer/cured product layer
(6) Base material/adhesive layer/transparent resin layer/cured product layer
(7) Base material/adhesive layer/decorative layer/transparent resin layer/cured product layer
(8) Base material/decorative layer/adhesive layer/transparent resin layer/cured product layer
(9) Base material/transparent resin layer/primer layer/cured product layer
(10) Base material/adhesive layer/transparent resin layer/primer layer/cured product layer
(11) Base material/adhesive layer/decorative layer/transparent resin layer/primer layer/cured product layer
(12) Base material/decorative layer/adhesive layer/transparent resin layer/primer layer/cured product layer

The antiviral article preferably has a constitution having a cured product layer on a base material from the viewpoint of handleability.

<<Base material>>

Examples of the form of the base material include a flat plate shape such as a film, a sheet, and a plate, and a three-dimensional shape such as a polyhedron, a polygonal prism, a cylinder, a spherical surface, and a spheroidal surface, and the form thereof is not particularly limited.

A film, a sheet, and a plate are often referred to as a film, a sheet, and a plate in ascending order of relative thickness, but as used herein, these three are not distinguished unless otherwise specified.

Examples of a constituent material of the base material include a resin, a metal, a non-metal inorganic material, a fibrous material, and a wood-based material, and the constituent material can be appropriately selected according to the intended use.

The base material may be a single layer, or may be a laminate formed by laminating two or more layers made of any of the above materials. When the base material is a laminate having two or more layers, two or more layers of different materials are preferably laminated to complement each other in performance properties of the materials of the layers. Examples of a base material formed by laminating two or more layers include the following A to J. "/" represents the interface between layers.

(A) Resin/wood-based material
(B) Resin/metal
(C) Resin/fibrous material
(D) Resin/non-metal inorganic material
(E) Resin 1/resin 2
(F) Metal/wood-based material
(G) Metal/non-metal inorganic material
(H) Metal/fibrous material
(I) Metal 1/metal 2
(J) Non-metal inorganic material/fibrous material

In the above E, resin 1 and resin 2 represent resins different from each other (for example, resin 1 is an olefin resin and resin 2 is an acrylic resin). In addition, in the above H, metal 1 and metal 2 represent metals different from each other (for example, metal 1 is copper and metal 2 is chromium).

In addition, when the base material is a laminate such as A to J, a layer (adhesive layer or the like) for strengthening the adhesive force may be provided between each constituent layer of the laminate.

Examples of the resin used as a base material include one consisting of any of various synthetic resins or natural resins. As a synthetic resin, a thermoplastic resin and a curable resin can be used.

Examples of the thermoplastic resin include an olefin resin such as polyethylene, polypropylene, polymethylpentene, an ionomer, or various olefin-based thermoplastic elastomers, a vinyl chloride-based resin such as polyvinyl chloride, polyvinylidene chloride, or vinyl chloride-vinyl acetate copolymerization containing an appropriate amount of a plasticizer if necessary, a polyester resin such as polyethylene terephthalate, polybutylene terephthalate, polyethylene naphthalate, an ethylene glycol-terephthalic acid-isophthalic acid copolymer, or a polyester-based thermoplastic elastomer, an acrylic resin such as polymethyl (meth)acrylate, polyethyl (meth)acrylate, polybutyl (meth)acrylate, or a methyl (meth)acrylate-butyl (meth)acrylate copolymer, a polyamide resin represented by nylon 6, nylon 66, or the like, a cellulose-based resin such as cellulose triacetate, cellophane, or celluloid, a styrene-based resin such as polystyrene, an acrylonitrile-styrene copolymer, or an acrylonitrile-butadiene-styrene copolymer (ABS), polyvinyl alcohol, ethylene-vinyl acetate copolymer, ethylene-vinyl alcohol copolymer, a polycarbonate resin, a polyarylate resin, and a polyimide resin

Examples of the curable resin include the thermosetting resin and the ionizing radiation curable resin given as examples in the cured product layer.

Examples of the natural resin include natural rubber, pine resin, and amber.

Examples of the metal used as a base material include aluminum or an alloy including aluminum such as duralumin, iron or an alloy including iron such as carbon steel or stainless steel, copper or an alloy including copper such as brass or bronze, gold, silver, chromium, nickel, cobalt, tin, and titanium. In addition, as a metal base material, one obtained by applying such a metal by plating or the like can also be used.

Examples of the non-metal inorganic material used as a base material include one made of a non-ceramic ceramics-based material such as cement, ALC (autoclaved lightweight concrete), gypsum, calcium silicate, or wood chip cement, a ceramic ceramics-based material such as ceramic ware, earthenware, glass, or enamel, or a natural stone such as limestone (including marble), granite, or andesite.

Examples of the fibrous material used as a base material include paper such as tissue paper, kraft paper, woodfree paper, Japanese paper, titanium paper, linter paper, sulfate paper, paraffin paper, parchment paper, glassine paper, backing paper for wallpaper, paperboard, or gypsum liner board, and a woven fabric or a non-woven fabric made

of a fiber such as a polyester resin fiber, an acrylic resin fiber, a protein-based or cellulose-based natural fiber such as silk, cotton, or hemp, a glass fiber, or a carbon fiber. To such paper, a resin such as an acrylic resin, styrene butadiene rubber, a melamine resin, or a urethane resin may be further added (resin impregnation after papermaking, or internal filling at the time of papermaking) in order to increase the interlayer strength between the fibers of a paper base material or between another layer and the paper or in order to prevent fluffing. Examples of the paper to which a resin is added include inter-paper reinforced paper and resin-impregnated paper.

In addition, examples of a base material in which a resin layer is laminated on a fibrous material layer include wallpaper raw paper obtained by laminating a resin layer such as a vinyl chloride-based resin layer, an olefin resin layer, or an acrylic resin layer on the surface of backing paper for wallpaper, which is often used in the field of a building material.

The shape and dimensions of the base material are not particularly limited and may be appropriately selected depending on the intended use, desired performance, and processing suitability.

When the base material is in the shape of a flat plate such as a film, a sheet, and a plate, the thickness is a typical design dimension of an article. The thickness is not particularly limited, and is generally about 10 μm or more and 10 cm or less from the viewpoint of production and processing suitability, mechanical strength, usability and handleability, and economy. In the case of a film or sheet form, one having a thickness of about 20 μm or more and 500 μm or less is usually selected, and in the case of a plate form, one having a thickness of about 1 mm or more and 2 cm or less is usually selected.

The base material layer can be subjected, on one surface or both surfaces thereof, to a surface treatment such as a physical surface treatment or a chemical surface treatment according to an oxidation method, a valley-ridge formation method, or the like in order to improve the close adhesiveness with another layer constituting an antiviral article or the close adhesiveness between an antiviral article and a member to be laminated.

Examples of the oxidation method include corona discharge treatment, chromium oxidation treatment, flame treatment, hot air treatment, and an ozone-ultraviolet treatment method, and examples of the valley-ridge formation method include a sandblast method and a solvent treatment method. These surface treatments are appropriately selected depending on the type of the base material, and in general, a corona discharge treatment method is preferably used from the viewpoint of the effectiveness, operability, and the like of the surface treatment.

<<Primer layer>>

The antiviral article preferably has a primer layer in contact with the surface on the base material side of the cured product layer. The primer layer improves the close adhesiveness between the base material and the cured product layer and can easily ensure long-term interlayer close adhesiveness (so-called weather resistance) at the time of exposure to ultraviolet light and improve the scratch resistance.

Examples of a case where an antiviral article is exposed to ultraviolet light include a case where an antiviral article is installed, constructed, or used at a place where sunlight including an ultraviolet spectrum penetrates such as a place near a window; a kitchen or the inside of a refrigerator and a cupboard where a mercury lamp for sterilization is installed; a place outdoors where the antiviral article is exposed to direct sunlight, or the like.

The primer layer is mainly composed of a binder resin, and may contain an additive such as an ultraviolet absorber or a light stabilizer if necessary.

Preferable examples of the binder resin include a resin such as a urethane resin, an acrylic polyol resin, an acrylic resin, an ester resin, an amide resin, a butyral resin, a styrene resin, a urethane-acrylic copolymer, a polycarbonate-based urethane-acrylic copolymer (a urethane-acrylic copolymer derived from a polymer (polycarbonate polyol) having a carbonate bond in the polymer main chain and having two or more hydroxyl groups in a terminal or a side chain), a vinyl chloride-vinyl acetate copolymer resin, a vinyl chloride-vinyl acetate-acrylic copolymer resin, a chlorinated propylene resin, a nitrocellulose resin (nitrocotton), or a cellulose acetate resin, and these can be used singly or in combinations of two or more. In addition, the binder resin may be one obtained by adding a curing agent such as an isocyanate-based curing agent or an epoxy-based curing agent to such a resin followed by crosslinking and curing. Among such binder resins, one obtained by crosslinking and curing a polyol-based resin such as an acrylic polyol resin with an isocyanate-based curing agent is preferable, and one obtained by crosslinking and curing an acrylic polyol resin with an isocyanate-based curing agent is more preferable.

The primer layer preferably includes an ultraviolet absorber and/or a light stabilizer in order to further improve the weather resistance. As the ultraviolet absorber and the light stabilizer, general-purpose ones can be used.

The thickness of the primer layer is preferably 0.01 μm or more and 10 μm or less, more preferably 0.7 μm or more and 8 μm or less, and further preferably 1.0 μm or more and 6 μm or less.

The antiviral article may have a back surface primer layer on the side of the base material opposite to the cured product layer for the purpose of, for example, improving the adhesiveness to an adherend.

In addition, the antiviral article may have a pressure-sensitive adhesive layer on the side of the base material opposite to the cured product layer for the purpose of adhering the antiviral article to an adherend. It is preferable to

form a peelable separator on the surface on the side of the pressure-sensitive adhesive layer opposite to the base material.

<<Transparent resin layer>>

The antiviral article may have a transparent resin layer between the base material and the cured product layer from the viewpoint of, for example, enhancing the strength. In particular, when the base material is a resin base material, the antiviral article preferably has a transparent resin layer.

When the antiviral article has a primer layer, the transparent resin layer is preferably located between the base material and the primer layer. In addition, when the antiviral article has a decorative layer, the transparent resin layer is preferably located between the decorative layer and the cured product layer from the viewpoint of protecting the decorative layer.

Examples of a resin constituting the transparent resin layer include a polyolefin-based resin, a polyester resin, a polycarbonate resin, acrylonitrile-butadiene-styrene resin (hereinafter, also referred to as "ABS resin"), an acrylic resin, and a vinyl chloride-based resin, and among these, a polyolefin-based resin is preferable from the viewpoint of processing suitability. In addition, two or more of these various resins given as examples may be laminated or mixed to be used.

The content of the polyolefin-based resin in the transparent resin layer is preferably 50% by mass or more, more preferably 70% by mass or more, and further preferably 90% by mass or more, with respect to all resin components of the transparent resin layer, from the viewpoint of processing suitability.

Examples of the polyolefin-based resin of the transparent resin layer include polyethylene (low density, medium density, high density), polypropylene, polymethylpentene, polybutene, an ethylene-propylene copolymer, a propylene-butene copolymer, an ethylene-vinyl acetate polymer, an ethylene-acrylic acid copolymer, and an ethylene-propylene-butene copolymer. Among these, polyethylene (low density, medium density, high density), polypropylene, an ethylene-propylene copolymer, and a propylene-butene copolymer are preferable, and polypropylene is more preferable.

The transparent resin layer may contain an additive such as an ultraviolet absorber, a light stabilizer, or a colorant.

The thickness of the transparent resin layer is preferably 20 μm or more and 150 μm or less, more preferably 40 μm or more and 120 μm or less, and further preferably 60 μm or more and 100 μm or less, from the viewpoint of the balance among scratch resistance, processing suitability, and weather resistance.

<<Decorative layer>>

The antiviral article preferably has a decorative layer at any position in the antiviral article from the viewpoint of improving the design.

The location where a decorative layer is formed is preferably on the side closer to the base material from the viewpoint of enhancing the weather resistance of the decorative layer. For example, when the antiviral article has a primer layer, the decorative layer is preferably located between the base material and the primer layer. In addition, when the antiviral article has a transparent resin layer, the decorative layer is preferably located between the base material and the transparent resin layer.

The decorative layer may be formed on the entire surface of the antiviral article or may be formed only on a part thereof. In the case of a form where the outer surface of the cured product layer is covered with a decorative layer, it is preferable to form the decorative layer only in a partial region in order not to inhibit the exhibition of the antiviral property.

Examples of the decorative layer include a colored layer formed by solid coating with an ink; a picture layer formed by printing an ink as a pattern; and a metal thin film.

Examples of a picture (pattern) expressed by the decorative layer include a wood grain pattern such as an annual ring or a conduit groove on the surface of a wood plate; a rift pattern on the surface of a stone plate such as marble or granite; a fabric texture pattern on the surface of a fabric; a leather grain pattern on the surface of a leather; a tiling pattern including a joint groove; a brickwork pattern including a joint groove; a sand grain pattern; an satin pattern; a pattern obtained by arranging a plurality of valley line portions and ridge line portions extending in directions parallel to each other (so-called "parallel line ridge-and-valley pattern" or "beam engraving pattern"); and a geometric pattern, a character, a graphic, or an abstract pattern such as a polka dot and a floral pattern.

As an ink used for the colored layer and the picture layer, one obtained by appropriately mixing a colorant such as a pigment or a dye, an extender pigment, a solvent, a stabilizer, a plasticizer, a catalyst, a curing agent, an ultraviolet absorber, a light stabilizer, or the like into a binder resin is used.

The binder resin for the colored layer and the picture layer is not particularly limited, and examples thereof include a resin such as a urethane resin, an acrylic polyol resin, an acrylic resin, an ester resin, an amide resin, a butyral resin, a styrene resin, a urethane-acrylic copolymer, a vinyl chloride-vinyl acetate copolymer resin, a vinyl chloride-vinyl acetate-acrylic copolymer resin, a chlorinated propylene resin, a nitrocellulose resin, or a cellulose acetate resin. In addition, various types of resins such as a one-component curable resin or a two-liquid component curable resin with a curing agent such as an isocyanate compound can be used.

The colorant is not particularly limited, and examples thereof include an inorganic pigment such as carbon black (India ink), iron black, titanium white, antimony white, yellow lead, titanium yellow, Bengal red, cadmium red, ultramarine blue, or cobalt blue; an organic pigment or dye such as quinacridone red, isoindolinone yellow, nickel azo complex, phthalocyanine blue, or azomethine azo black; a metal pigment made of a scaly foil piece of aluminum, brass, or the like; and a pearlescent (pearl) pigment made of a scaly foil piece of titanium dioxide coated mica, basic lead carbonate, or the like.
The content of the colorant is preferably 5 parts by mass or more and 90 parts by mass or less, more preferably 15 parts by mass or more and 80 parts by mass or less, and further preferably 30 parts by mass or more and 70 parts by mass or less, with respect to 100 parts by mass of the resin constituting the colored layer and the picture layer.
The colored layer and the picture layer may contain an additive such as an ultraviolet absorber, a light stabilizer, or a colorant.
The thickness of the colored layer and the picture layer may be appropriately selected depending on the desired picture, and is preferably 0.5 μm or more and 20 μm or less, more preferably 1 μm or more and 10 μm or less, and further preferably 2 μm or more and 5 μm or less, from the viewpoint of concealing the ground color of an adherend and improving the design.
Examples of the metal thin film include a thin film of a single substance of a metal element such as gold, silver, copper, tin, iron, indium, nickel, chromium, or cobalt; and a thin film of an alloy including two or more of these metal elements. Examples of the alloy include brass, bronze, and stainless steel.
The film thickness of the metal thin film can be about 0.1 μm to 1 μm.

<<Adhesive layer>>

The antiviral article may have an adhesive layer.
For example, when the antiviral article has a transparent resin layer, it is preferable to form an adhesive layer between the base material and the transparent resin layer in order to improve the close adhesiveness between both the layers.
When the antiviral article further has a decorative layer between the base material and the transparent resin layer, the positional relationship between the adhesive layer and the decorative layer is not particularly limited. Specifically, the antiviral article may have a decorative layer, an adhesive layer, and a transparent resin layer in presented order from the side closer to the base material, or have an adhesive layer, a decorative layer, and a transparent resin in presented order from the side closer to the base material layer.
In addition, as described above, when the base material is a laminate having two or more layers, an adhesive layer may be provided between adjacent layers constituting the base material.
The adhesive layer can be composed of an adhesive such as a urethane-based adhesive, an acrylic-based adhesive, an epoxy-based adhesive, or a rubber-based adhesive. Among these adhesives, a urethane-based adhesive is preferable in terms of adhesive force.
Examples of the urethane-based adhesive include an adhesive using a two-liquid component curable urethane resin including various polyol compounds such as a polyether polyol, a polyester polyol, or an acrylic polyol, and a curing agent such as an isocyanate compound.
The thickness of the adhesive layer is preferably 0.01 μm or more and 30 μm or less, more preferably 1 μm or more and 15 μm or less, and further preferably 2 μm or more and 10 μm or less.
The decorative layer, the adhesive layer, and the primer layer described above can each be formed, for example, by applying a coating liquid including a composition forming the layer by a known method such as a gravure printing method, a bar coating method, a roll coating method, a reverse roll coating method, or a comma coating method, and if necessary, drying and curing the coating liquid.

<Shaping treatment>

The antiviral article may be given a desired valley-ridge shape (also referred to as valley-ridge pattern) by a shaping treatment such as embossing.
When carrying out embossing, the embossing can be carried out, for example, by heating the antiviral article to preferably 80°C or more and 260°C or less, more preferably 85°C or more and 200°C or less, and further preferably 100°C or more and 180°C or less and pressing an embossing plate against the antiviral article. The location where the embossing plate is pressed is preferably the cured product layer side of the antiviral article.

<Antiviral activity value>

The antiviral article of the present disclosure preferably has an antiviral activity value of more than 0.0 as

measured by the following method. In order to exhibit sufficient antiviral performance, the antiviral activity value is more preferably 1.0 or more, and further preferably 2.0 or more. The following method is an ISO 21702 compliant method.

<<Method for measuring antiviral activity value>>

0.4 ml of a virus liquid is added dropwise to 5 cm square test pieces (antivirally processed article and unprocessed article), and the test pieces are each covered with a 4 cm square film. These test pieces are allowed to stand at 25°C for 24 hours. After standing, the virus on the test pieces is washed out and collected, and the virus infectivity is measured. The antiviral activity value is calculated by the following expression (1).

$$R = Ut\text{-}At \quad (1)$$

R: Antiviral activity value
Ut: Average of common logarithm of virus infectivity (PFU/$cm^2$) after allowing unprocessed article to stand for 24 hours
At: Average of common logarithm of virus infectivity (PFU/$cm^2$) after allowing antivirally processed article to stand for 24 hours

<Uses>

The antiviral article of the present disclosure can be used in various uses. Examples of a specific use include the following (1) to (12).

When the antiviral article of the present disclosure is used as the following various surface materials, if necessary, a known adhesive layer may be interposed between a surface material and an adherend on which the surface material is to be laminated. Examples of an adhesive that can be used include a hot melt adhesive that adheres by cooling and solidifying after heating and melting, a hot setting adhesive that adheres by a polymerization or crosslinking reaction by heating, an ionizing radiation curable adhesive that adheres by a polymerization or crosslinking reaction by irradiation with an ionizing radiation such as ultraviolet light and an electron beam, and a pressure-sensitive adhesive that adheres only by pressurization through the use of the pressure-sensitive adhesiveness of the adhesive itself.

(1) A surface material for an interior portion such as a wall, a floor, or a ceiling of a building such as a house, an office, a store, a hospital, or a clinic.
(2) A surface material for an exterior portion such as an external wall, a roof, an eaves soffit, or a door pocket of a building such as a house, an office, a store, a hospital, or a clinic.
(3) A surface material for fittings (interior portion or exterior portion) such as a window, a window frame, a door, or a door frame; a surface material for an accessory (handle or the like) of fittings; and a surface material for a jig for fittings.
(4) A surface material for fixtures such as a handrail, a spandrel wall, a crown molding, a sill, a head jamb, or a coping.
(5) A surface material for an outdoor (exterior) portion such as a fence, a gate, or a pillar or a handrail of a clothes-drying platform.
(6) A surface material for furniture such as a chest of drawers, a desk, a chair, a cupboard, or a kitchen sink; a surface material for an accessory (handle or the like) of furniture; and a surface material for a jig for furniture.
(7) A surface material for a housing or the like of various home appliances such as a television receiver, a radio receiver, a refrigerator, a microwave oven, a washing machine, a fan, or an air conditioner; a surface material for an accessory (handle, switch, touch panel, or the like) of a home appliance; and a surface material for a jig for a home appliance.
(8) A surface material for OA equipment such as an electronic copying machine, a facsimile, a printer, or various computation equipment such as a personal computer; a surface material for a housing of various OA equipment for an ATM apparatus of a financial institution such as a bank or a post office; a surface material for an accessory (keyboard, touch panel, or the like) of various OA equipment; and a surface material for a jig for various OA equipment.
(9) A surface material for an interior or exterior portion (wall, floor, ceiling, handrail, pillar, or control equipment such as operator panel, lever, handle, or steering wheel) of a vehicle such as an automobile or a railroad vehicle, a ship, or an aircraft.
(10) A partition for various buildings; a shielding plate or a shielding curtain for preventing virus droplet infection at a window, a checkout location, or the like in a store, an office, a public office, or the like; a face protector such as a face shield (face guard) or protective glasses (goggles); or a surface material therefor.
(11) A business form such as a slip; a passbook; a card such as a cash card of a financial institution, a credit card, or a point card; or a surface material therefor.

(12) A bottle of glass, resin, or the like; a metal can; a resin soft packaging material such as a resin retort container; a packaging material such as various tubes; or a surface material therefor.

[Antiviral resin composition]

The antiviral resin composition of the present disclosure is a resin composition including a curable resin composition, an antiviral agent obtained by supporting or containing a silver ion in a carrier, and a light stabilizer, wherein the resin composition includes, as the light stabilizer, one or more hindered amine-based compounds selected from the group consisting of an NH type hindered amine-based compound and an NR type hindered amine-based compound.

The embodiments of the "curable resin composition," the "antiviral agent obtained by supporting or containing a silver ion in a carrier," and the "NH type hindered amine-based compound and NR type hindered amine-based compound" in the antiviral resin composition of the present disclosure are the same as the embodiments of the "curable resin composition," the "antiviral agent obtained by supporting or containing a silver ion in a carrier," and the "NH type hindered amine-based compound and NR type hindered amine-based compound" in the antiviral article of the present disclosure described above.

The antiviral resin composition of the present disclosure may contain an antioxidant, an ultraviolet absorber, or the like, if necessary.

The embodiments of the "antioxidant" and the "ultraviolet absorber" in the antiviral resin composition of the present disclosure are the same as the embodiments of the "antioxidant" and the "ultraviolet absorber" in the antiviral article of the present disclosure described above.

<Solvent>

The antiviral resin composition of the present disclosure preferably includes a solvent.

Examples of the solvent include a ketone (acetone, methyl ethyl ketone, methyl isobutyl ketone (MIBK), cyclohexanone, or the like), an ether (dioxane, tetrahydrofuran, or the like), an aliphatic hydrocarbon (hexane or the like), an alicyclic hydrocarbon (cyclohexane or the like), an aromatic hydrocarbon (toluene, xylene, or the like), a halocarbon (dichloromethane, dichloroethane, or the like), an ester (methyl acetate, ethyl acetate, butyl acetate, or the like), an alcohol (isopropanol, butanol, cyclohexanol, or the like), a cellosolve (methyl cellosolve, ethyl cellosolve, or the like), a glycol ether (propylene glycol monomethyl ether acetate, or the like), a cellosolve acetate, a sulfoxide (dimethyl sulfoxide or the like), and an amide (dimethylformamide, dimethylacetamide, or the like), and the solvent may be a mixture thereof.

The content of the solvent is preferably 10 to 60% by mass, and more preferably 30 to 50% by mass, with respect to the total amount of the antiviral resin composition (ink for cured product layer).

Examples

Next, the present disclosure will be described in more detail with reference to Examples, but the present disclosure is not limited by these Examples at all.

1. Preparation and evaluation of antiviral article

- Preparation of antiviral article -

[Example 1]

Ink a for a cured product layer (antiviral resin composition a) according to Example 1 was prepared by mixing and stirring the following composition.

<Ink a for cured product layer (antiviral resin composition a)>

| | |
|---|---|
| • Ionizing radiation curable resin composition (trifunctional urethane acrylate oligomer having a weight average molecular weight of 4000) | 100 parts by mass |
| • Antiviral agent obtained by containing a silver ion in a carrier (product number "PG711" manufactured by Koa Glass Co., Ltd., glass as carrier, average particle diameter of 3 μm) | 3 parts by mass |
| • NR type hindered amine-based compound (product number "Tinuvin 144" of BASF SE) | 2 parts by mass |

(continued)

| | |
|---|---|
| • Ultraviolet absorber (hydroxyphenyltriazine, TINUVIN 479, manufactured by BASF SE) | 2 parts by mass |
| • Extender pigment (irregular silica) (average particle diameter: 10 μm) | 16 parts by mass |
| • Solvent (ethyl acetate) | 50 parts by mass |

Next, a two-liquid component curable acrylic-urethane resin and an ink for a decorative layer including a colorant were applied to one surface of a base material (a titanium oxide-containing polypropylene resin sheet having a thickness of 60 μm) subjected to a corona discharge treatment on both surfaces by a gravure printing method and dried to form a decorative layer having a wood grain pattern having a thickness of 3 μm.

Next, an adhesive layer having a thickness of 3 μm made of a urethane resin-based adhesive was formed on the decorative layer, and further, a polypropylene-based resin was heated and melt-extruded onto the adhesive layer by using a T-die extruder to form a transparent resin layer having a thickness of 80 μm.

Next, the surface of the transparent resin layer was subjected to a corona discharge treatment, and then an ink for a primer layer having the following composition was applied onto the transparent resin layer by a gravure printing method and dried to form a primer layer having a thickness of 2 μm.

Next, ink a for a cured product layer (antiviral resin composition a) was applied onto the primer layer by a roll coating method to form an uncured cured product layer, and the uncured cured product layer was dried at 60°C for 1 minute and then irradiated with an electron beam (acceleration voltage: 175 kV, 5 Mrad (50 kGy)) to crosslink and cure the curable resin composition (ionizing radiation curable resin composition) to form a cured product layer having a thickness of 15 μm to obtain the antiviral article of Example 1. Ink a for a cured product layer (antiviral resin composition a) was applied onto the primer layer immediately after the preparation of the ink.

<Ink for primer layer>

| | |
|---|---|
| • A mixture of urethane-acrylic copolymer and acrylic polyol | 100 parts by mass |
| • Hexamethylene diisocyanate | 5 parts by mass |

[Example 2]

Ink b for a cured product layer (antiviral resin composition b) according to Example 2 was prepared by changing the NR type hindered amine-based compound of ink a for a cured product layer (antiviral resin composition a) to an NR type hindered amine-based compound (product number "Tinuvin 765" of BASF SE).

Next, an antiviral article of Example 2 was obtained in the same manner as in Example 1 except that ink a for a cured product layer (antiviral resin composition a) was changed to ink b for a cured product layer (antiviral resin composition b).

[Example 3]

Ink c for a cured product layer (antiviral resin composition c) according to Example 3 was prepared by changing the NR type hindered amine-based compound of ink a for a cured product layer (antiviral resin composition a) to an NR type hindered amine-based compound (product number "LS3410" manufactured by Nippon Nyukazai Co., Ltd. One having an ethylenic double bond polymerizable with a curable resin composition).

Next, an antiviral article of Example 3 was obtained in the same manner as in Example 1 except that ink a for a cured product layer (antiviral resin composition a) was changed to ink c for a cured product layer (antiviral resin composition c).

[Example 4]

Ink d for a cured product layer (antiviral resin composition d) according to Example 4 was prepared by changing the NR type hindered amine-based compound of ink a for a cured product layer (antiviral resin composition a) to an NH type hindered amine-based compound (product number "Tinuvin 770DF" of BASF SE).

Next, an antiviral article of Example 4 was obtained in the same manner as in Example 1 except that ink a for a cured product layer (antiviral resin composition a) was changed to ink d for a cured product layer (antiviral resin composition d).

[Example 5]

Ink e for a cured product layer (antiviral resin composition e) according to Example 5 was prepared by adding 1 part by mass of a phosphorus-based antioxidant (phosphorus-based antioxidant represented by the above formula 1-1-1) to ink a for a cured product layer (antiviral resin composition a).

Next, an antiviral article of Example 5 was obtained in the same manner as in Example 1 except that ink a for a cured product layer (antiviral resin composition a) was changed to ink e for a cured product layer (antiviral resin composition e).

[Example 6]

Ink f for a cured product layer (antiviral resin composition f. Ink c for a cured product layer according to Example 3 wherein the amount of the hindered amine-based compound added was increased) according to Example 6 was prepared by changing the NR type hindered amine-based compound of ink a for a cured product layer (antiviral resin composition a) to an NR type hindered amine-based compound (product number "LS3410" manufactured by Nippon Nyukazai Co., Ltd. One having an ethylenic double bond polymerizable with a curable resin composition) and changing the amount thereof added from 2 parts by mass to 5 parts by mass.

Next, an antiviral article of Example 6 was obtained in the same manner as in Example 1 except that ink a for a cured product layer (antiviral resin composition a) was changed to ink f for a cured product layer (antiviral resin composition f).

[Example 7]

Ink g for a cured product layer (antiviral resin composition g) according to Example 7 was prepared by changing the antiviral agent to "product number "NEOSINTOL AV-18F" manufactured by SC Environmental Science Co., Ltd., antiviral agent obtained by supporting or containing a silver ion in a carrier, average particle diameter: 3.0 μm)" and changing the amount thereof added from 3 parts by mass to 0.5 parts by mass, and further, changing the NR type hindered amine-based compound to an NR type hindered amine-based compound (product number "LS3410" manufactured by Nippon Nyukazai Co., Ltd. One having an ethylenic double bond polymerizable with a curable resin composition), in ink a for a cured product layer (antiviral resin composition a).

Next, an antiviral article of Example 7 was obtained in the same manner as in Example 1 except that ink a for a cured product layer (antiviral resin composition a) was changed to ink g for a cured product layer (antiviral resin composition g).

[Example 8]

Ink h for a cured product layer (antiviral resin composition h. Ink g for a cured product layer according to Example 7 wherein the amount of the hindered amine-based compound added was increased) according to Example 8 was prepared by changing the antiviral agent to "product number "NEOSINTOL AV-18F" manufactured by SC Environmental Science Co., Ltd., antiviral agent obtained by supporting or containing a silver ion in a carrier, average particle diameter: 3.0 μm)" and changing the amount thereof added from 3 parts by mass to 0.5 parts by mass, and further, changing the NR type hindered amine-based compound to an NR type hindered amine-based compound (product number "LS3410" manufactured by Nippon Nyukazai Co., Ltd. One having an ethylenic double bond polymerizable with a curable resin composition) and the amount thereof added from 2 parts by mass to 5 parts by mass.

Next, an antiviral article of Example 8 was obtained in the same manner as in Example 1 except that ink a for a cured product layer (antiviral resin composition a) was changed to ink h for a cured product layer (antiviral resin composition h).

[Comparative Example 1]

Ink i for a cured product layer (antiviral resin composition i) according to Comparative Example 1 was prepared by removing the NR type hindered amine-based compound from ink a for the cured product layer (antiviral resin composition a).

Next, an antiviral article of Comparative Example 1 was obtained in the same manner as in Example 1 except that ink a for a cured product layer (antiviral resin composition a) was changed to ink i for a cured product layer (antiviral resin composition i).

[Comparative Example 2]

Ink j for a cured product layer (antiviral resin composition j) according to Comparative Example 2 was prepared by changing the NR type hindered amine-based compound of ink a for a cured product layer (antiviral resin composition a) to an NOR type hindered amine-based compound (product number "Tinuvin 123" of BASF SE).
Next, an antiviral article of Comparative Example 2 was obtained in the same manner as in Example 1 except that ink a for a cured product layer (antiviral resin composition a) was changed to ink j for a cured product layer (antiviral resin composition j).

[Comparative Example 3]

Ink k for a cured product layer (antiviral resin composition k) according to Comparative Example 3 was prepared by changing the NR type hindered amine-based compound of ink a for a cured product layer (antiviral resin composition a) to an NOR type hindered amine-based compound (product number "Tinuvin 152" of BASF SE).
Next, an antiviral article of Comparative Example 3 was obtained in the same manner as in Example 1 except that ink a for a cured product layer (antiviral resin composition a) was changed to ink k for a cured product layer (antiviral resin composition k).

- Evaluation of discoloration of antiviral articles -

For the antiviral articles of the Examples and the Comparative Examples, the L*a*b* values immediately after production were measured. The measurement atmosphere was such that the temperature was 23°C ± 5°C and the humidity was 40 to 65% RH. As a measuring apparatus, a spectrophotometer ("Spectrolino" (model number), manufactured by GretagMacbeth LLC) was used.
Next, the antiviral articles of the Examples and the Comparative Examples were subjected to an accelerated weather resistance test using a metal halide lamp (MWOM) (a test in which a step of irradiating ultraviolet light for 20 hours under the following irradiation conditions and then carrying out dew condensation for 4 hours under the following dew condensation conditions was taken as one cycle, and the cycle was repeated) for 2 cycles (48 hours). Then, the L*a*b* values after the accelerated weather resistance test were measured.
Then, the color difference (ΔE*ab) was calculated from the measured values immediately after production and the measured values after the accelerated weather resistance test. Results thereof are shown in Table 1.
When the measured values immediately after production are $L^{*1}$, $a^{*1}$, and $b^{*1}$ and the measured values after the accelerated weather resistance test are $L^{*2}$, $a^{*2}$, and $b^{*2}$, the color difference (ΔE*ab) can be calculated by the following expression.

$$\Delta E^{*}ab = [(L^{*2} - L^{*1})^2 + (a^{*2} - a^{*1})^2 + (b^{*2} - a^{*2})^2]^{1/2}$$

<Test apparatus>

Trade name "Daipla Metal Weather" manufactured by Daipla Wintes Co., Ltd.

<Irradiation conditions>

Illuminance: 65 mW/cm$^2$, black panel temperature: 63°C, humidity in tank: 50% RH, time: 20 hours

<Dew condensation conditions>

Illuminance: 0 mW/cm$^2$, humidity in tank: 98% RH, time: 4 hours

- Antiviral activity value -

The antiviral activity values of the antiviral articles of the Examples and the Comparative Examples were measured according to the "Method for measuring antiviral activity value" in the main text of the Description. Two types of antiviral activity values, against influenza virus and feline calicivirus, were measured.

Table 1

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| Composition | a | b | c | d | e | f | 9 | h | i | i | k |
| Discoloration (color difference) | 1.13 | 2.40 | 1.32 | 1.18 | 1.18 | 2.27 | 2.39 | 1.17 | 5.31 | 5.19 | 5.09 |
| Antiviral activity value (influenza) | ≥2.0 | ≥2.0 | ≥2.0 | ≥2.0 | ≥2.0 | ≥2.0 | ≥2.0 | ≥2.0 | ≥2.0 | ≥2.0 | N.D. |
| Antiviral activity value (feline calicivirus) | ≥2.0 | ≥2.0 | _>2.0 | ≥2.0 | ≥2.0 | ≥2.0 | ≥2.0 | ≥2.0 | ≥2.0 | ≥2.0 | N.D. |

As shown in Table 1, it can be confirmed that the antiviral articles of the Examples can suppress discoloration.

Further, as shown in Table 1, it can be confirmed that the antiviral articles of the Examples each have a good antiviral property. It is considered that the hindered amine-based compounds do not affect the antiviral activity values.

2. Provision or preparation and evaluation of antiviral resin compositions

- Provision or preparation of antiviral resin compositions -

As antiviral resin compositions of Reference Examples 1 to 4, the above antiviral resin compositions a, e, i, and j were provided.

Further, antiviral resin composition 1 of Reference Example 5 was prepared by removing the NR type hindered amine-based compound from ink a for a cured product layer (antiviral resin composition a), and instead, adding 1 part by mass of a phosphorus-based antioxidant (phosphorus-based antioxidant represented by the above formula 1-1-1).

Further, antiviral resin composition 1 of Reference Example 6 was prepared by removing the NR type hindered amine-based compound from ink a for a cured product layer (antiviral resin composition a), and instead, adding 1 part by mass of a phosphorus-based antioxidant (phosphorus-based antioxidant represented by the above formula 1-2-1).

- Evaluation of discoloration of antiviral resin compositions -

In a room shielded from outside light, 30 g each of the antiviral resin compositions of the Reference Examples was placed in glass bottles (manufactured by AS ONE Corporation, product number: LABORAN Screw Tube Bottle 50 ml), respectively, and the lids were closed to prepare samples for evaluation. At this stage, the color of the antiviral resin composition in each of the samples showed no difference from the color of a composition to which no antiviral agent was added (composition obtained by removing the antiviral agent from the antiviral resin composition of the Reference Example) and was white.

Next, the samples were placed on a desk and left in a room under fluorescent lighting for 24 hours, and then the color of the antiviral resin composition in each of the samples was visually evaluated. The brightness by the illumination of a fluorescent lamp on the desk was in the range of 500 to 1000 lux. Results thereof are shown in Table 2.

Table 2

| | Reference Examples | | | | | |
|---|---|---|---|---|---|---|
| | 1 | 2 | 3 | 4 | 5 | 6 |
| Resin composition | a | e | i | j | l | m |
| Discoloration (in the state of ink for 24 hours under fluorescent light) | Ocher | White | Ocher | Ocher | White | White |

From the results in Table 2, it can be confirmed that the antiviral resin compositions can suppress discoloration due to light in the state of an antiviral resin composition by including a phosphorus-based antioxidant (compositions e, l, and m each included a phosphorus-based antioxidant). This result shows that an antiviral resin composition including one or more hindered amine-based compounds selected from the group consisting of an NH type hindered amine-based

compound and an NR type hindered amine-based compound, and further, a phosphorus-based antioxidant can be improved in handleability without requiring storage in the dark or the like. The results of Examples 1 to 8 in Table 1 shows that even if an antiviral resin composition does not include a phosphorus-based antioxidant, discoloration can be suppressed if a cured product layer is formed from the composition before being irradiated with a large amount of light. That is, it is a preferable embodiment of the present disclosure to include a phosphorus-based antioxidant.

Reference Signs List

100: antiviral article
10: cured product layer
11: cured product of curable resin composition
12: antiviral agent obtained by supporting or containing silver ion in carrier
20: base material

## Claims

**1.** An antiviral article comprising a cured product layer, wherein

the cured product layer comprises a cured product of a curable resin composition, an antiviral agent obtained by supporting or containing a silver ion in a carrier, and a light stabilizer, and
the cured product layer comprises, as the light stabilizer, one or more hindered amine-based compounds selected from the group consisting of an NH type hindered amine-based compound and an NR type hindered amine-based compound.

**2.** The antiviral article according to claim 1, wherein the antiviral article comprises 0.1 to 20.0 parts by mass of the antiviral agent with respect to 100 parts by mass of the cured product.

**3.** The antiviral article according to claim 1 or 2, wherein an average particle diameter of the antiviral agent is 0.1 to 10.0 $\mu$m.

**4.** The antiviral article according to any one of claims 1 to 3, wherein when an average particle diameter of the antiviral agent is defined as D and a thickness of the cured product layer is defined as T, D/T is 1.0 or less.

**5.** The antiviral article according to any one of claims 1 to 4, wherein at least a part of the antiviral agent protrudes from a surface of the cured product layer.

**6.** The antiviral article according to any one of claims 1 to 5, wherein the antiviral article comprises 20 to 1000 parts by mass of the one or more hindered amine-based compounds selected from the group consisting of an NH type hindered amine-based compound and an NR type hindered amine-based compound with respect to 100 parts by mass of the antiviral agent.

**7.** The antiviral article according to any one of claims 1 to 6, wherein the one or more hindered amine-based compounds are an NR type hindered amine-based compound.

**8.** The antiviral article according to claim 7, wherein the NR type hindered amine-based compound has a hydrogen atom bonded to a nitrogen atom replaced with an alkyl group in a 2,2,6,6-tetramethylpiperidine skeleton, and the number of carbon atoms of the alkyl group is 1 to 12.

**9.** The antiviral article according to any one of claims 1 to 8, wherein the cured product layer further comprises an antioxidant.

**10.** The antiviral article according to claim 9, wherein the antioxidant is a compound having a phosphorous acid structure represented by the following general formula (1).

(1)

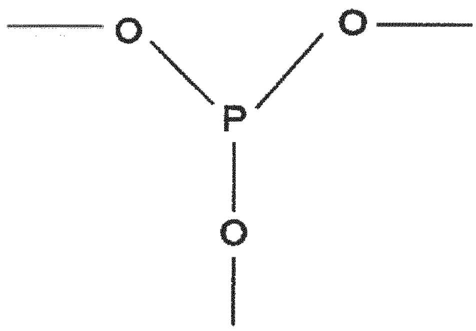

11. The antiviral article according to claim 9 or 10, wherein the antioxidant is a compound represented by the following general formula (1-2-1)

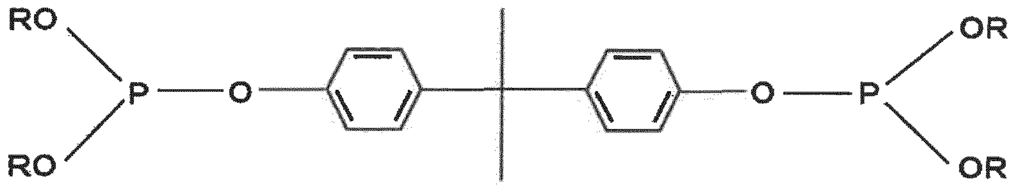

(1-2-1)

wherein each R independently represents a linear alkyl group having 12 to 15 carbon atoms.

12. The antiviral article according to any one of claims 1 to 11, wherein the cured product layer further comprises an ultraviolet absorber.

13. The antiviral article according to any one of claims 1 to 12, wherein the antiviral article comprises the cured product layer on a base material.

14. An antiviral resin composition that is a resin composition comprising a curable resin composition, an antiviral agent obtained by supporting or containing a silver ion in a carrier, and a light stabilizer, wherein the resin composition comprises, as the light stabilizer, one or more hindered amine-based compounds selected from the group consisting of an NH type hindered amine-based compound and an NR type hindered amine-based compound.

[Fig. 1]

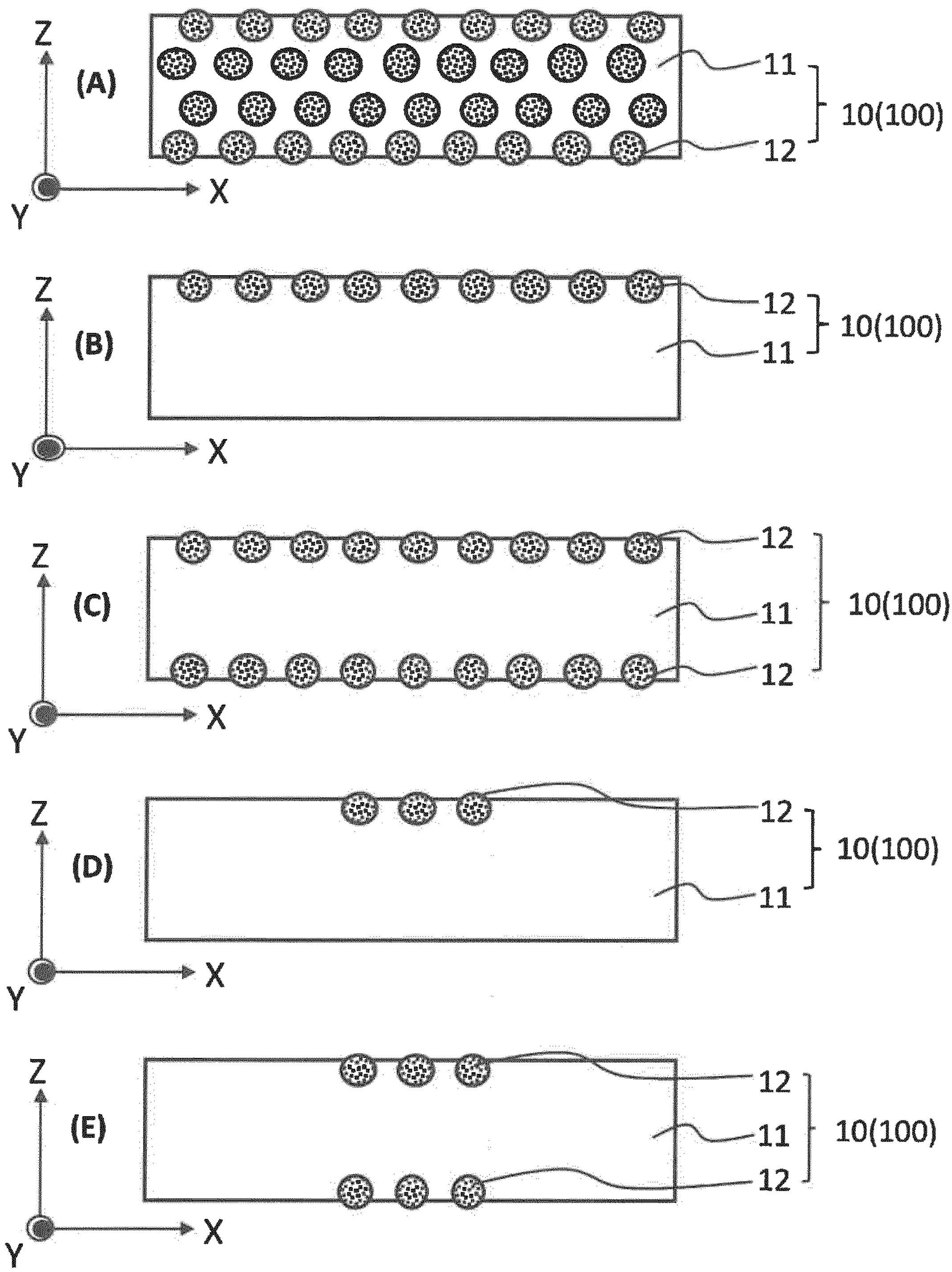
Z
(A)
X
Y
11
12
10(100)
Z
(B)
X
Y
12
11
10(100)
Z
(C)
X
Y
12
11
12
10(100)
Z
(D)
X
Y
12
11
10(100)
Z
(E)
X
Y
12
11
12
10(100)

[Fig. 2]

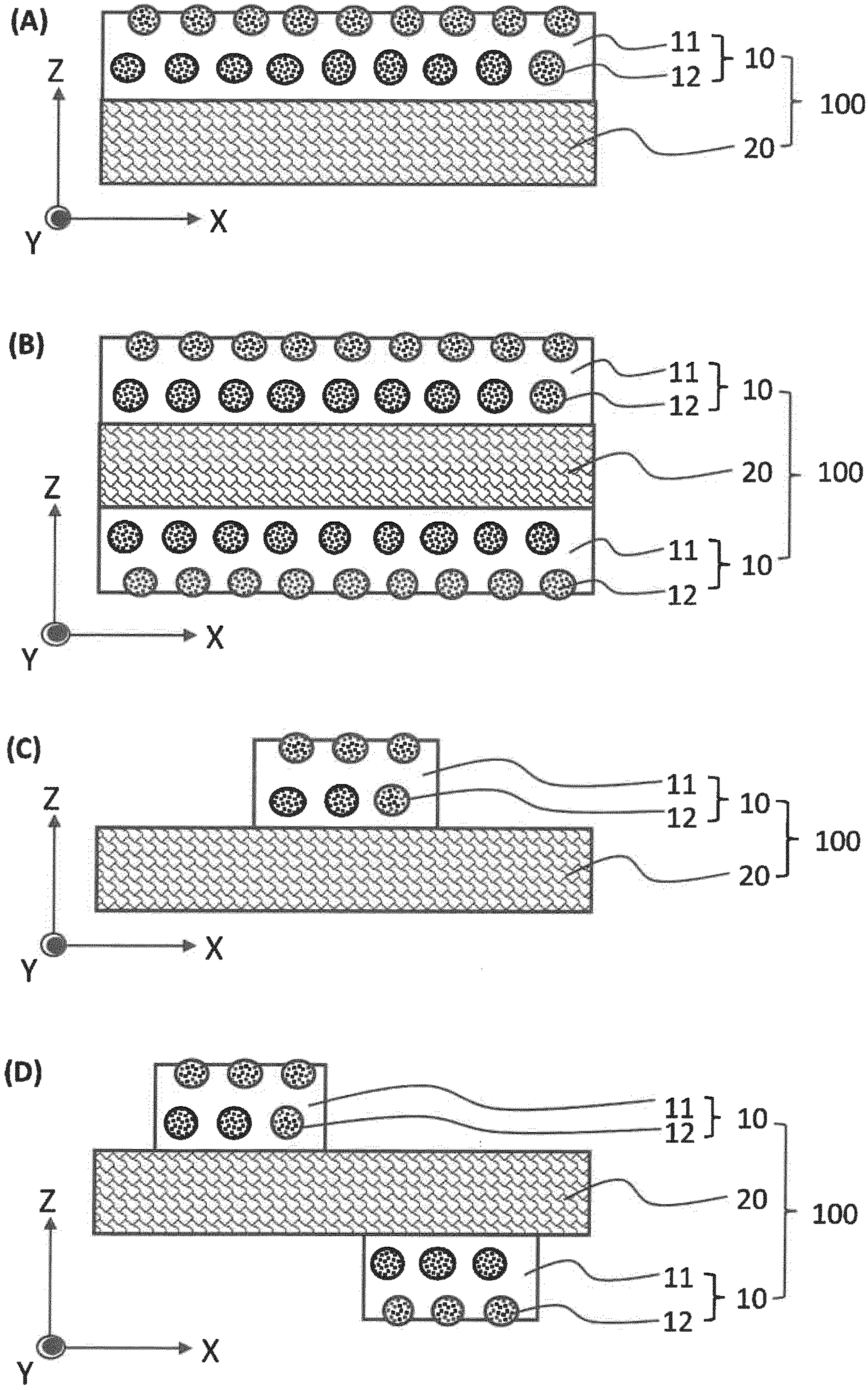
(A)
Z
X
Y
11
12
10
100
20
(B)
Z
X
Y
11
12
10
20
100
11
12
10
(C)
Z
X
Y
11
12
10
100
20
(D)
Z
X
Y
11
12
10
20
100
11
12
10

[Fig. 3]

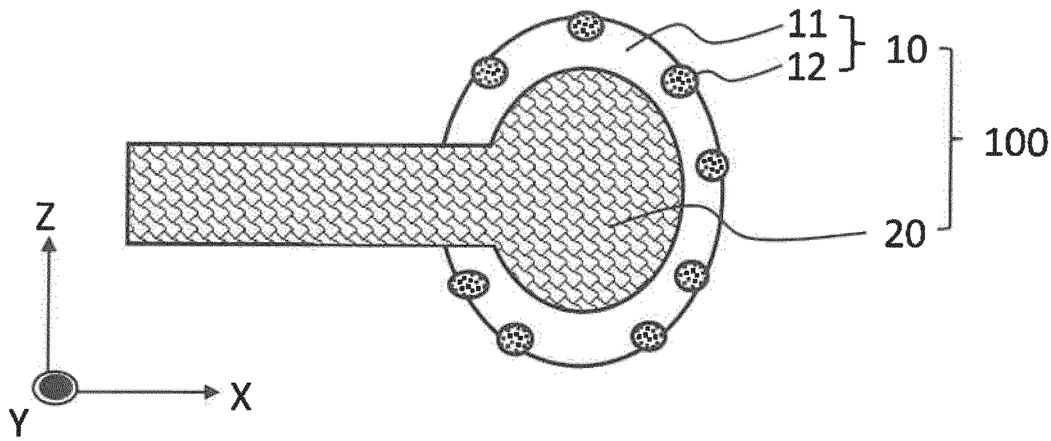

| INTERNATIONAL SEARCH REPORT | International application No. PCT/JP2021/027970 |
|---|---|

A. CLASSIFICATION OF SUBJECT MATTER

B32B 27/18(2006.01)i; C08K 5/3435(2006.01)i; C08K 5/3492(2006.01)i; C08K 5/524(2006.01)i; C08L 101/00(2006.01)i; C08J 5/18(2006.01)i; C08K 3/08(2006.01)i

FI: B32B27/18 F; C08J5/18 CEY; C08K3/08; C08K5/3435; C08K5/3492; C08K5/524; C08L101/00

According to International Patent Classification (IPC) or to both national classification and IPC

B. FIELDS SEARCHED

Minimum documentation searched (classification system followed by classification symbols)

B32B1/00-43/00; C08J5/00-5/02; C08J5/12-5/22; C08K3/00-13/08; C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 63-265958 A (SHINAGAWA NENRYO KK) 02 November 1988 (1988-11-02) claims, page 2, lower left column, lines 3-7, page 2, lower left column, lines 16-19, page 4, upper left column, lines 5-8, page 4, lower left column, line 14 to lower right column, line 6, page 5, upper left column, line 14 to upper right column, line 8, page 5, upper right column, line 17 to lower left column, line 11, page 6, upper left column, line 19 to upper right column, line 6, page 8, upper left column, page 9, lower right column, tables 1, 4, examples | 1-14 |
| A | JP 2019-177360 A (DAINIPPON PRINTING CO., LTD.) 17 October 2019 (2019-10-17) entire text, all drawings | 1-14 |

☒ Further documents are listed in the continuation of Box C. ☒ See patent family annex.

* Special categories of cited documents:

- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 09 September 2021 (09.09.2021) | 21 September 2021 (21.09.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No. PCT/JP2021/027970

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-80887 A (TOPPAN COSMO INC.) 27 April 2015 (2015-04-27) entire text, all drawings | 1-14 |

Form PCT/ISA/210 (continuation of second sheet) (January 2015)

**INTERNATIONAL SEARCH REPORT**
Information on patent family members

International application No.
PCT/JP2021/027970

| Patent Documents referred in the Report | Publication Date | Patent Family | Publication Date |
|---|---|---|---|
| JP 63-265958 A | 02 Nov. 1988 | US 4938955 A claims, column 1, lines 36-50, column 4, lines 8-12, column 4, lines 46-53, column 5, lines 3-12, column 5, lines 19-33, column 6, lines 28-34, column 8, lines 25-30, column 9, lines 45-54, tables 1, 4, examples EP 288063 A2 | |
| JP 2019-177360 A | 17 Oct. 2019 | (Family: none) | |
| JP 2015-80887 A | 27 Apr. 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63265958 A
- JP 3551201 B
- JP 4840048 B
- JP 6145758 B
- JP 6229429 B